(19) Europäisches Patentamt
European Patent Office
Office européen des brevets

(11) **EP 4 618 390 A1**

(12) **EUROPEAN PATENT APPLICATION**

(43) Date of publication:
**17.09.2025 Bulletin 2025/38**

(21) Application number: **24163806.3**

(22) Date of filing: **15.03.2024**

(51) International Patent Classification (IPC):
**H02M 1/36** *(2007.01)*    **H02M 3/00** *(2006.01)*
**H02M 3/335** *(2006.01)*

(52) Cooperative Patent Classification (CPC):
**H02M 1/36; H02M 3/01; H02M 3/33571;**
**H02M 3/33573;** H02M 1/0035; H02M 1/0064

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Infineon Technologies Austria AG**
**9500 Villach (AT)**

(72) Inventors:
• **ESCUDERO RODRIGUEZ, Manuel**
**1200 Wien (AT)**
• **PULSINELLI, Francesco**
**9500 Villach (AT)**
• **KUTSCHAK, Matteo-Alessandro**
**9072 Ludmannsdorf (AT)**
• **STAHL, Jürgen**
**85084 Reichertshofen (DE)**
• **BESSEGATO, Renato**
**82041 Oberhaching (DE)**

(74) Representative: **Westphal, Mussgnug & Partner,**
**Patentanwälte mbB**
**Werinherstraße 79**
**81541 München (DE)**

(54) **METHOD FOR STARTING UP A POWER CONVERTER**

(57)    A method for operating a power converter in a startup mode is disclosed. The power converter includes an input (11, 12) configured to receive input power; an output (13, 14) configured to provide output power; an input stage (2) connected to the input (11, 12); an output stage (4) connected to the output (13, 14); and a transformer circuit (3). The transformer circuit (3) includes a primary winding (311) coupled to the input stage (2) and a secondary winding (312) coupled to the output stage (4).

Operating the power converter in the startup mode includes operating the power converter in a plurality of burst cycles (200), and operating the power converter in each burst cycle includes activating the input stage (2) for an activation period (201) and deactivating the input stage (2) for a deactivation period (202). A duration (T2) of the deactivation period (202) is at least 5 times a duration (T1) of the activation period (201).

FIG 1

EP 4 618 390 A1

**Description**

This disclosure relates in general to a method for starting up a power converter, in particular, for starting up an isolating power converter.

An isolating power converter is a power converter that includes a transformer between an input and an output of the power converter. The transformer provides for a galvanic isolation between the input and the output. An isolating DC-DC converter is an isolating power converter that is configured to receive a DC voltage (direct voltage) and a direct current at the input and provide a DC voltage and a direct current at the output.

Transferring power from the input to the output in an isolating DC-DC converter may include generating an alternating current through a primary winding of the transformer by an input stage connected to the input. The alternating current through the primary winding induces an alternating current through a secondary winding of the transformer. Transferring power from the input to the output of the DC-DC converter may further include rectifying the alternating current through the secondary winding by an output stage connected to the output.

In a normal operating mode or steady state of an isolating DC-DC converter the alternating current through the primary winding may be generated at an essentially fixed frequency. In this case, a ratio between a voltage level of the output voltage and the voltage level of the input voltage is dependent on a winding ratio of the transformer and the frequency of the alternating current. By varying the current frequency, the ratio between output voltage and input voltage can be varied, albeit within a rather narrow range.

The output voltage may be a voltage across an output capacitor connected to the output. A startup phase of the power converter is an operating phase between a time instance at which the input voltage is applied to the input and the output capacitor is not charged and a time instance at which the output capacitor has been charged to the desired output voltage level and operates in the steady operating mode.

Generating the alternating current flowing through the primary winding usually includes generating an alternating voltage across an inductor connected in series with the primary winding of the transformer. In a startup mode, that is, when the output capacitor has not yet been charged to the desired voltage level, the magnitude of the alternating voltage across the inductor may be higher than in the normal operating mode (steady state). This may cause the current through the inductor to more rapidly increase and decrease in the startup mode than in the normal operating mode. In order to prevent the current through the inductor from becoming excessively high during the startup mode, starting up the power converter may include generating the alternating voltage across the inductor and, therefore, the alternating current through the primary winding, at a much higher frequency than in the normal operating mode. The operating frequency in the startup mode may be up to 10 times of the frequency in the normal operating mode.

Generating the alternating voltage may include using a switching circuit with at least one electronic switch. Generating the alternating voltage at a higher frequency in the startup mode includes operating the at least one electronic switch at a higher switching frequency than in the normal operating mode. Operating an electronic switch, such as a power transistor, is associated with switching losses. Basically, the higher the switching frequency, the higher the switching losses and the higher the thermal stress in the electronic switch. Furthermore, operating the electronic switch at the higher switching frequency during the startup phase may require oversizing a drive circuit for driving the electronic switch.

In order to reduce the size and cost of a power converter it may be desirable to reduce a size and, therefore, an inductance of the inductor connected in series with the transformer of an isolating power converter. Reducing the inductance of the inductor, however, increases the problem outlined above because a lower inductance requires a higher frequency during the startup phase to limit the magnitude of the current through the inductor.

There is therefore a need for an improved method for starting up a power converter, in particular, for starting up an isolating DC-DC power converter.

One example relates to a method. The method includes operating a power converter in a startup mode. The power converter includes an input configured to receive input power, an output configured to provide output power, an input stage connected to the input, an output stage connected to the output, and a transformer circuit. The transformer circuit includes a primary winding coupled to the input stage and a secondary winding coupled to the output stage. Operating the power converter in the startup mode includes operating the power converter in a plurality of burst cycles, wherein operating the power converter in each burst cycle includes activating the input stage for an activation period and deactivating the input stage for a deactivation period, wherein a duration of the deactivation period is at least 5 times a duration of the activation period.

Another example relates to a control circuit that is configured to operate a power converter in a startup mode, wherein to operate the power converter in the startup mode comprises to operate the power converter in a plurality of burst cycles, wherein to operate the power converter in each burst cycle includes to activate the input stage for an activation period and deactivate the input stage for a deactivation period. A duration of the deactivation period is at least 5 times a duration of the activation period.

Examples are explained below with reference to the drawings. The drawings serve to illustrate certain principles, so that only aspects necessary for understanding these principles are illustrated. The drawings are not to scale. In the drawings the same reference characters denote like features.

Figure 1 schematically illustrates one example of an isolating power converter that includes an input stage, an output stage, and a transformer circuit including a transformer with a primary winding and a secondary winding;

Figure 2 illustrates one example of a method for starting up a power converter of the type illustrated in Figure 1;

Figure 3 show a signal diagram that illustrates one example of the method according to Figure 2;

Figure 4 illustrates one example of the input stage and the output stage;

Figure 5 shows a modification of the output stage shown in Figure 4;

Figures 6 and 7 shows signal diagrams that illustrate one example for starting up a power converter of the type illustrated in Figure 4;

Figure 8 shows signal diagrams that illustrate operation of a power converter of the type illustrated in Figure 4 at the end of a startup mode;

Figure 9 shows signal diagrams that illustrate operation of a power converter of the type illustrated in Figure 4 in a normal operating mode;

Figure 10 illustrates another example of the input stage and the output stage;

Figure 11 shows a modification of the output stage according to Figure 10;

Figure 12 illustrates another example of the input stage and the output stage;

Figure 13 illustrates yet another example of the input stage and the output stage;

Figure 14 shows signal diagrams of a current through the primary winding and an output current of the power converter in one activation period of a burst cycle during startup;

Figures 15A-15C shows signal diagrams that illustrate operation of the power converter at different phases of starting up the power converter;

Figure 16 shows signal diagrams that illustrate a dependency of time durations of the different operating phases illustrated in Figures 14 and 15A-15C on an output voltage of the power converter;

Figure 17 shows signal diagrams of a current through the primary winding, an output current of the power converter, and a magnetizing current in one activation period of a burst cycle during startup;

Figures 18A-18B shows signal diagrams that illustrate operation of the power converter at different phases of starting up the power converter;

Figure 19 shows signal diagrams that illustrate a dependency of time durations of the different operating phases illustrated in Figures 17 and 18A-18B on an output voltage of the power converter;

Figures 20 and 21 show signal diagrams of a current through the primary winding and a magnetizing current in one activation period of a burst cycle during startup;

Figure 22 shows signal diagrams that illustrate a dependency of time durations of the different operating phases illustrated in Figures 20 and 21 on an output voltage of the power converter;

Figure 23 shows signal diagrams that illustrate one example of a transition of the power converter from the startup mode to a normal operating mode;

Figure 24 shows signal diagrams that illustrate a further example of a transition of the power converter from the startup mode to the normal operating mode; and

Figure 25 shows one example of a power converter arrangement that includes two power converters of the type illustrated in Figure 1.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

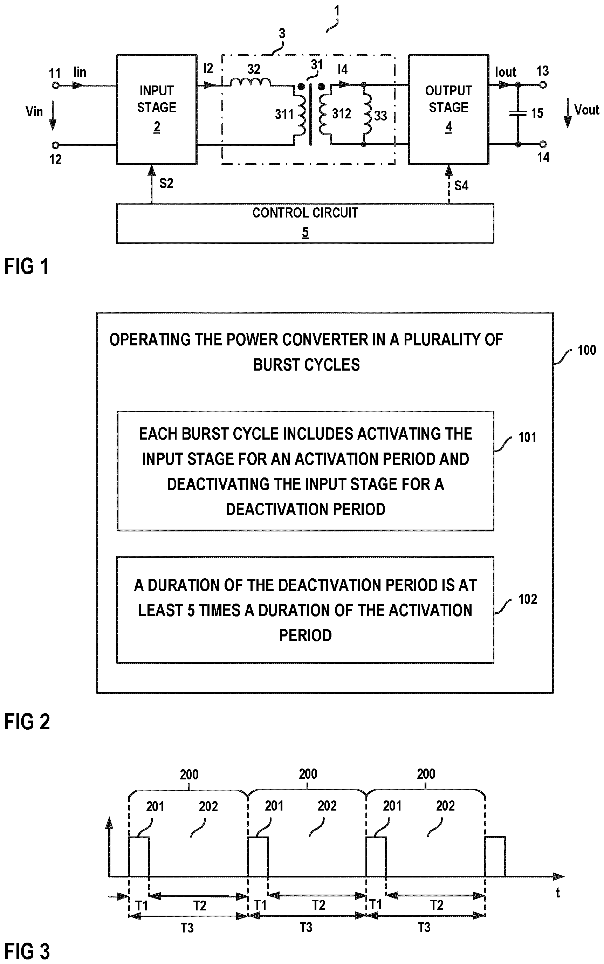

Figure 1 schematically illustrates a power converter 1 according to one example. The power converter includes an input 11, 12 that is configured to receive input power, an output 13, 14 that is configured to provide output power, an input stage 2 connected to the input 11, 12, an output stage 4 connected to the output 13, 14, and a transformer circuit 3 connected between the input stage 2 and the output stage 4.

Referring to Figure 1, receiving input power at the input 11, 12 of the power converter 1 may include receiving an input voltage Vin between first and second input nodes of the input 11, 12 and receiving an input current Iin. The input voltage Vin and the input current Iin are received by the input stage 2, for example.

Providing output power at the output 13, 14 may include providing an output voltage Vout between first and second output nodes of the output 13, 14 and providing an output current Iout. The power converter may include an output capacitor 15 that is connected between the first and second output nodes 13, 14. Just for the purpose of illustration, in the example shown in Figure 1, the output current Iout is a current provided by the output stage 4 and flowing towards the output capacitor 15 and the output 13, 14.

The transformer circuit 3 includes a transformer 31 with a primary winding 311 and a secondary winding 312, and an inductor 32 connected in series either with the primary winding 311, or the secondary winding 312. The inductor 32 connected in series with the primary winding 311 is also referred to as series inductor in the following. In the example illustrated in Figure 1, the series inductor 32 is connected in series with the primary winding 311. This, however, is only an example. It is also possible to implement the series inductor 32 to be connected in series with the secondary winding 312. The explanation of the functionality of the power converter provided in the following applies to both scenarios, the series inductor 32 in series with the primary winding 311 and the series inductor 32 in series with the secondary winding 312, equivalently.

Optionally, the transformer circuit 3 includes a further inductor 33 that is connected in parallel with either the secondary winding 312, or the primary winding 311. The inductor 33 connected in parallel with the secondary winding 312 is also referred to as parallel inductor in the following. In the example illustrated in Figure 1, the parallel inductor 33 is connected in parallel with the secondary winding 312. This, however, is only an example. It is also possible to implement the parallel inductor 33 to be connected in parallel with the primary winding 311. The explanation of the functionality of the power converter provided in the following applies to both scenarios, the parallel inductor 33 in parallel with the secondary winding 312 and the series inductor in parallel with the primary winding 311, equivalently.

In the circuit diagram illustrated in Figure 1, reference numbers 31 denotes an ideal transformer. A real transformer implemented in an electronic circuit is usually not an ideal transformer and, in addition to an ideal transformer, may include parasitic inductances such as leakage inductances. According to one example, at least a portion of each of the series and parallel inductors 32, 33 illustrated in Figure 1 is formed by a parasitic inductance of a real transformer. This may include that each of the series and parallel inductors 32, 33 only includes a parasitic inductance of a real transformer. In this example, the transformer circuit 3 according to Figure 1 may be implemented using a real transformer, only. However, forming at least a portion of each of the series and parallel inductors 32, 33 by a parasitic inductance of a real transformer may also include that at least one of the series and parallel inductors 32, 33 includes a discrete inductor in addition to the parasitic inductance provided by the real transformer.

According to one example, the series and parallel inductors 32, 33 are formed by parasitic inductances of a real transformer, only. According to one example, the real transformer is a planar transformer with windings formed on PCBs (Printed Circuit Boards). A winding ratio n of the transformer 31 is given by a ratio n311/n312 between the number n311 of turns of the primary winding 311 and the number n312 of turns of the secondary winding 312,

$$n = \frac{n311}{n312} \qquad (1).$$

The winding ratio n is selected from between 0.5 and 2, for example.

According to one example, an inductance L32 of the series inductor 32 is between 50 nH and 300 nH, in particular between 100 nH and 200 nH.

The transformer 31 of the transformer circuit 3 provides for a galvanic isolation between the input 11, 12 and the output 13, 14 of the power converter. The power converter according to Figure 1 may therefore be referred to as isolating power converter. According to one example, the power converter is an isolating DC-DC power converter. In this example, the input voltage Vin received at the input 11, 12 is a DC voltage, and the output voltage Vout provided at the output 13, 14 is a DC voltage.

Referring to Figure 1, the power converter further includes a control circuit 5 that is configured to control operation of the input stage 2. As explained herein further below, the output stage 4 can be implemented as a passive output stage with passive electronic devices or as an active output stage with active electronic devices. In the event that the output stage number 4 is an active output stage, the control circuit number 5 is further configured to control operation of the output stage 4. Control signal S2 illustrated in Figure 1 represents one or more control signals generated by the control circuit 5 to control generational the input stage 2. Equivalently, control signal S4 represents one or more control signals generated by the control circuit 5 to control operation of the output stage 4.

Transferring power from the input 11, 12 to the output 13, 14 of the power converter via the transformer 31 includes generating a first alternating current I2 by the input stage 2 that flows through the series circuit including the primary winding 311 and the series inductor 32. The primary winding 311 and the secondary winding 312 are inductively coupled. Due to the inductive coupling between the primary winding 311 and the secondary winding 312 the first alternating current I2 flowing through the primary winding 311 induces a second alternating current I4 in the secondary winding 312. The output stage 4 is configured to rectify the second alternating current I4 to provide the output current Iout and the output voltage Vout.

Generating the first alternating current I2 by the input stage 2 is associated with generating an alternating voltage V32 across the series inductor 32. A startup mode of the power converter is an operating mode between a time instance at which the input voltage Vin is applied to the input 11, 12 and the output capacitor 15 is not charged and a time instance at which the output capacitor 15 has been charged to the desired voltage level of the output voltage Vout. In the startup mode, a magnitude of the voltage V32 across the series inductor 32 may be higher than in a normal operating mode of the power converter. The normal operating mode is an operating mode after the startup mode, that is, after the voltage across the output capacitor 15 has reached a predefined voltage level. The higher magnitude of the inductor voltage V32 during the startup mode may have the effect that the alternating current I2 increases and decreases faster in the startup mode than in the normal operating mode.

In order to limit the magnitude of the alternating current I2 in the startup mode, a conventional way of starting up a power converter of the type illustrated in Figure 1 may include generating the alternating current I2 with a much higher frequency in the startup mode than in the normal operating mode. This, however, may cause severe thermal stress in electronic switches included in the input stage 2 for generating the alternating current I2. This is because operating the electronic switches to generate the alternating current is associated with switching losses and the switching losses increase as the switching frequency increases.

Referring to Figure 2, an improved method (100) for starting up the power converter includes operating the power converter 1 in a plurality of burst cycles, wherein (101) each burst cycle includes activating the input stage for an activation period and deactivating the input stage for a deactivation period, and wherein (102) a duration of the deactivation period in each burst cycle is at least 5 times a duration of the activation period. One example of a method for starting up the power converter in accordance with the method according to Figure 2 is schematically illustrated in Figure 3.

Figure 3 schematically illustrates activation and deactivation periods of the input stage 2 in a plurality of successive burst cycles over the time. Just for the purpose of illustration, three successive burst cycles 200 are illustrated in Figure 3. Each of the burst cycles 200 includes an activation period 201 with an activation duration T1 and a deactivation period 202 with a deactivation duration T2. Just for the purpose of illustration, in the example shown in Figure 3, the activation duration T1 is the same in the individual burst cycles and the deactivation generation T2 is the same in the individual burst cycles illustrated in Figures 3. This, however, is only an example. In particular the activation duration T1 may vary over the startup phase. In each burst cycle, however, the deactivation duration T2 of the deactivation period is at least 5 times the duration T1 of the respective activation period.

A burst duration T3 is the duration of one burst cycle and is given by the first duration T1 plus the second duration T2,

$$T3 = T1 + T2 \qquad\qquad (2).$$

According to one example, at least one period of the first alternating current I2 is generated in each of the activation periods 201. Generating one period of the first alternating current is associated with a switching operation of at least two switches included in the input stage 2. Such switching operation is associated with switching losses. By deactivating the input stage 2 for the relatively long deactivation period 202 after each activation period 201 severe thermal stress in the input stage 2 during the startup mode can be avoided. This is explained in detail herein further below.

According to one example, activating the input stage 2 in the activation period 201 includes operating each of the at least two electronic switches in an on-state (switched-on state) at least once during the activation period. Furthermore, deactivating the input stage 2 in the activation period includes operating each of the at least two electronic switches in an off-state (switched-off state) throughout the deactivation period 202.

The input stage 2, which is configured to generate the first alternating current I2, may be implemented in various ways. Equivalently, the output stage 4, which is configured to rectify the second alternating current I4 may be implemented in various ways. One example for implementing the input stage 2 and the output stage 4 is illustrated in Figures 3 and explained in the following. Further examples are explained herein further below.

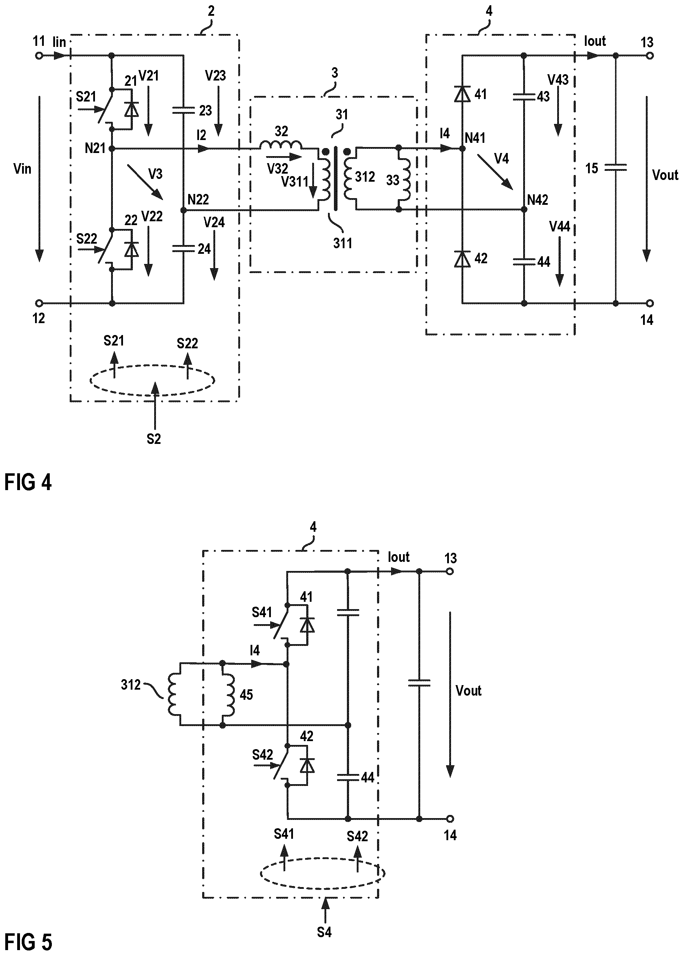

Referring to Figure 4, the input stage 2 includes a bridge circuit with a first half-bridge and a second half-bridge that are each connected between the first input node 11 and the second input node 12. The first half-bridge is a switch half-bridge and includes a first electronic switch 21 and the second electronic switch 22 connected in series between the first and second input nodes 11, 12. The second half-bridge is a capacitor half-bridge and includes a first capacitor 23 and a second capacitor 24 connected in series between the first and second input nodes 11, 12. The first half-bridge includes a first tap N1, which is a circuit node at which the first and second switches 21, 22 are connected. The second half-bridge includes a second tap N2, which is a circuit node at which the first and second capacitors 23, 24 are connected.

Each of the first and second switches 21, 22 may include a switching element and a rectifier element, such as a diode, connected in parallel with the switching element. The electronic switches 21, 22 are connected in series such that the rectifier elements are connected in series (as opposed to being connected in anti-series). The switching element of the first electronic switch 21 is controlled by a first drive signal S21 received from the control circuit 5 (not illustrated) in Figure 4, and the switching element of the second electronic switch 22 is controlled by a second drive signal S22 received from the control circuit 5. According to one example, each of the first and second switching elements 21, 22 is a MOSFET. In this example, the rectifier element may be formed by a body diode of the MOSFET and is an integral part of the MOSFET. This, however, is only an example. It is also possible to implement the first and second electronic switches 21, 22 such that the switching element and the rectifier element are two different discrete devices, such as an IGBT and a diode connected in parallel.

A first bridge voltage V3 of the power converter is a voltage between the first and second taps N21, N22 of the bridge circuit in the input stage 2. The primary side of the transformer circuit 3 is connected between the first and second taps N21, N22, so that the primary side of the transformer circuit 3 receives the bridge voltage V3. In the example illustrated in Figure 4, the primary side of the transformer circuit includes the series circuit with the primary winding 311 and the series inductor 32.

Referring to Figure 4, the output stage 4 includes a bridge circuit similar to the bridge circuit of the input stage 2. The bridge circuit of the output stage 4 includes a first half-bridge and a second half-bridge that are each connected between a first one 13 of the output nodes 13, 14 and a second one 14 of the output nodes 13, 14. The first half-bridge is a rectifier half-bridge and includes a first rectifier element 41 and a second rectifier element 42 connected in series between the first and second output nodes 13, 14. The rectifier elements 41, 42 are diodes, for example. The second half-bridge is a capacitor half-bridge and includes a first capacitor 43 and a second capacitor 44 connected in series between the first and second output nodes 13, 14.

The first half-bridge of the bridge circuit in the output stage 4 includes a first tap N41, which is a circuit node at which the first and second rectifier elements 41, 42 are connected. The second half-bridge of bridge circuit includes a second tap N42, which is a circuit node at which the first and second capacitors 43, 44 of the bridge circuit are connected. A voltage V4 between the first and second taps N41, N42 of the bridge circuit in the output stage 4 is referred to as second bridge voltage in the following.

In the output circuit 4 illustrated in Figure 4, the rectifier elements 41, 42 of the first half-bridge are passive rectifier elements. Implementing the rectifier elements as passive rectifier elements, however, is only an example. It is also possible to implement the rectifier elements as active rectifier elements (synchronous rectifiers). An example of an output stage with active rectifier elements is illustrated in Figure 5.

In the output stage illustrated in Figure 5, each of the rectifier elements 41, 42 is an active rectifier element that includes a switching element controlled by the control circuit (not illustrated in Figure 5) by a respective control signal S41, S42 and a passive rectifier element connected in parallel with the switching element. Everything explained above with regard to implementing the electronic switches 21, 22 according to Figure 4 applies to implementing the active rectifier elements 41, 42 illustrated in Figure 5 accordingly.

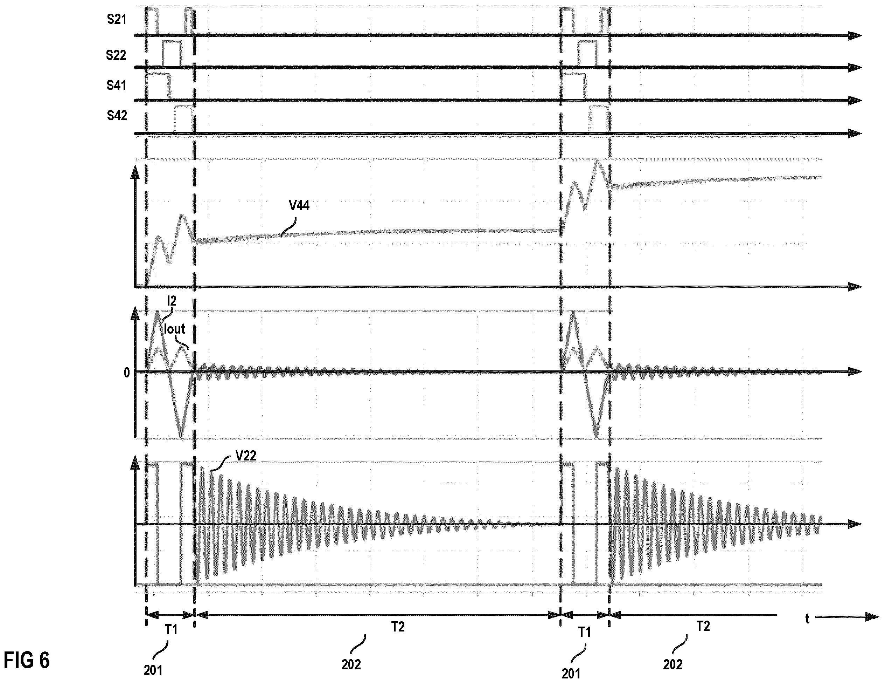

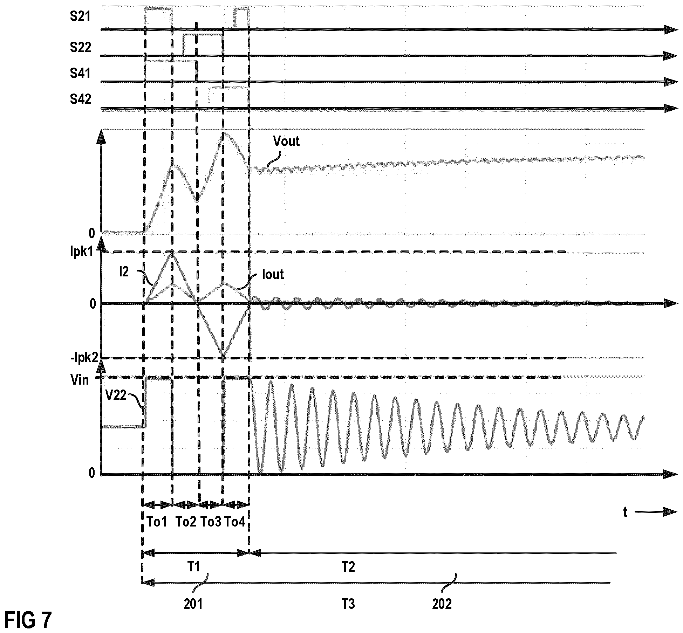

Figures 6 and 7 show signal diagrams that illustrate operation of the power converter illustrated in Figure 4 in the startup mode. Figure 6 illustrates two successive burst cycles, Figure 7 illustrates one burst cycle in greater detail. Each of Figures 6 and 7 illustrates signal diagrams of the drive signals S21, S22 of the first and second electronic switches 21, 22 in the input stage 2, the voltage V44 across the second capacitor 44, the alternating current I2 provided by the input stage 2 to the transformer circuit 3, the output current Iout, and the voltage V22 across the second electronic switch 22. The voltage V44 across the second capacitor is about 50% of the output voltage Vout and, different from the output voltage Vout, may also decrease during certain time period in the startup mode. Furthermore, Figures 6 and 7 show signal diagrams of the control signals S41, S42 for controlling operation of active rectifier elements 41, 42 in an output stage of the type illustrated in Figure 4. These control signals, however, are optional and are available when the output stage 4 is implemented as an active output stage of the type illustrated in Figure 5.

The output current Iout illustrated in Figures 6 and 7 is a rectified version of the second alternating current I4 through the secondary winding 312 of the transformer 31, wherein the second alternating current I4 through the secondary winding 312 is induced by the first alternating current I2.

As can be seen from Figure 6, in each activation period T1 in the startup mode a certain amount of energy is transferred from the primary side to the secondary side of the transformer arrangement 3, so that in each activation period T1 the output voltage Vout increases by a certain amount.

According to one example, the input stage 2 is operated such that in each activation period 201 at least one period of the first alternating current I2 is generated. In the examples illustrated in Figures 6 and 7, exactly one period of the first alternating current I2 is generated in one activation period 201. Generating one period of the first alternating current I2 includes operating the input stage 2 successively in four different operating states. This is explained with reference to Figure 7 in the following.

In Figure 7, To1 denotes a first operating phase, To4 denotes a second operating phase, To3 denotes a third operating phase, and To4 denotes a fourth operating phase of operating the input stage 2 in the activation period 201. In the following, To1, To2, To3, To4 denote both the respective operating phase and the duration of the respective operating phase. Referring to Figure 7, in the first operating phase To1, the first current I2 changes from zero to a predefined first maximum Ipk1; in the second operating phase To2, the first current I2 changes from the first maximum Ipk1 to zero; in the third operating phase To3, the first current I2 changes from zero to a predefined second maximum -Ipk2 having a polarity opposite the polarity of the first maximum Ipk1; and in the fourth operating phase, the first current I2 changes from the second maximum - Ipk2 to zero. Just for the purpose of illustration, in the example illustrated in Figure 7, the first maximum Ipk1 is a positive maximum and the second maximum -Ipk2 is a negative maximum. According to one example, magnitudes of the positive and negative maxima Ipk1, -Ipk2 are equal,

$$|Ipk1| = |-Ipk2| = Ipk \tag{3}.$$

According to one example, the magnitude of the positive and negative maxima Ipk1, -Ipk2 are each lower than a predefined maximum current Imax. The maximum current Imax, for example, is a current level of the second current I2 at which the transformer 31 starts to saturate or is a maximum rated current of the electronic switches 21, 22 in the input stage 2.

According to one example, the positive and negative maxima Ipk1, -Ipk2 are predefined, so that the first operating phase To1 ends and the second operating phase To2 starts when the first current I2 reaches the positive maximum Ipk1, and so that the third operating phase To3 ends and the fourth operating phase To4 starts when the second current I2 reaches the negative maximum -Ipk2.

The drive signals S21, S22 for driving the first and second electronic switches 21, 22 may each have an on-level and an off-level. The on-level is a signal level that switches on the respective electronic switch 21, 22, and the off-level is a signal level that switches off the respective electronic switch 21, 22. Switching on an electronic switch 21, 22 includes switching on the switching element of the respective electronic switch, and switching of an electronic switch 21, 22 includes switching off the switching element of the respective electronic switch. Due to the rectifier elements, each of the first and second electronic switches 21, 22 is capable of conducting a current in one specific current direction even when the respective electronic switch 21, 22 is in the off-state.

Equivalently, the drive signals S41, S42 for driving the first and second active rectifier elements 41, 42 may each have an on-level and an off-level, wherein the on-level switches on the switching element of the respective active rectifier element 41, 42 and the off-level switches off the switching element of the respective active rectifier element. Just for the purpose of illustration, in the examples illustrated in Figures 6 and 7, on-levels of the drive signals S21, S22, S41, S42 are drawn as high signal levels and off-levels are drawn as low signal levels.

Referring to Figure 7, operating the input stage 2 in the first operating phase To1 includes switching on the first electronic switch 21 and switching off the second electronic switch 22. In this operating phase, the voltage across the second electronic switch 22 essentially equals the input voltage Vin and the first current I2 flows from the first input node 11 via the first electronic switch 21, the primary side of the transformer circuit 3, and the second capacitor 24 to the second input node 12. According to one example, the first and second capacitors 23, 24 in the input stage 2 essentially have the same capacitance. In this example, voltages V23, V24 across the first and second capacitors 23, 24 are essentially equal and essentially equal to 50% of the input voltage Vin,

$$V23 \approx V24 \approx \frac{Vin}{2} \tag{4}.$$

Thus, in the first operating phase To1, the first bridge voltage V3 essentially equals half of the input voltage, V3≈Vin/2.

According to one example, the first and second capacitors 43, 44 in the output stage 4 essentially have the same capacitance. In this example, voltages V43, V44 across the first and second capacitors are essentially equal and essentially equal to 50% of the output voltage Vout,

$$V43 \approx V44 \approx \frac{Vout}{2} \tag{5}.$$

The slope of the second current I2 in the first operating phase To1 is essentially given by the voltage V32 across the series inductor 32 divided by the inductance L32 of the series inductor 32. In the circuit according to Figure 4, the voltage V32 across the series inductor 32 is given by the bridge voltage V3 minus the voltage V311 across the primary winding 311,

$$V32 = V3 - V311 \tag{6}.$$

The voltage V311 across the primary winding 311 is reflected from the secondary side and is dependent on the winding ratio n of the transformer 31 and the second bridge voltage V4,

$$V311 = n \cdot V4 \tag{7a}.$$

The second bridge voltage V4 essentially equals half of the output voltage Vout, so that the voltage V311 across the primary winding 311 is essentially given by

$$V311 = n \cdot \frac{Vout}{2} \tag{7b}.$$

At the beginning of the startup phase, the output voltage Vout and the voltage V311 across the primary winding 311 are essentially zero, so that the voltage V32 across the series inductor 32, in accordance with equation (6) essentially equals the first bridge voltage V3, which essentially equals 50% of the input voltage Vin. The output voltage Vout increases during the startup phase, so that the voltage V311 across the primary winding increases and the voltage V32 across the series inductor 32 during the first operating phase To1 decreases over the startup phase.

Referring to Figure 7, the first operating phase To1 ends and the second operating phase To2 starts when the first electronic switch 21 switches off. In the second operating phase To2, the second current I2 continues to flow and decreases. The decrease of the second current I2 is because the transformer circuit 3 is disconnected from the input 11, 12. In the second operating phase To2, the second electronic switch 22 takes over the second current, so that the second current I2 flows through the primary side of the transformer circuit 3, the second capacitor 24 and the second electronic switch 22. In the second operating phase To2, the current direction of the second current I2 is such that the rectifier element of the electronic switch 22 can take over the second current I2. Thus, in the second operating phase To2 the second electronic switch 22 may be switched on, but not necessarily has to be switched on. According to one example, the second electronic switch 22 is switched on after a predefined delay time after the first electronic switch 21 has been switched off. The delay time between switching off the first electronic switch 21 and switching on the second electronic switch 22 helps to avoid a cross current through the first half-bridge with the first and second electronic switches 21, 22.

In the second operating phase To2, the voltage V22 across the second electronic switch 22 is essentially zero and the first bridge voltage V3 essentially equals 50% of the negated input voltage Vin, V3≈-Vin/2.

Referring to Figure 7, at the end of the second operating phase To2 and the beginning of the third operating phase To3, the second current I2 changes its direction. The second electronic switch 22 is in the on-state throughout the third operating phase To3. The bridge voltage V3 in the third operating phase To3 essentially equals the voltage V24 across the second capacitor 24 and essentially equals half of the input voltage Vin, V3≈Vin/2. The third operating phase To3 ends and the fourth operating phase To4 starts when the second current I2 to has reached the negative maximum -Ipk2.

When the second electronic switch 22 switches off at the end of the third operating phase To3, the first electronic switch 21 takes over the second current I2. In the fourth operating phase To4, the second current I2 has a current direction that enables the rectifier element of the first electronic switch 21 to take over the second current I2. Thus, in the fourth operating phase To4, the first electronic switch 21 may be switched on but not necessarily has to be switched on. According to one example, the first electronic switch 21, in the fourth operating phase To4, is switched on after a certain delay time (dad time) after the second electronic switch 22 has been switched off. At the beginning of the fourth operating phase To4, that is, when the first electronic switch 21 takes over the first current I2, the voltage V22 across the second electronic switch 22 increases from zero to the input voltage Vin. In the fourth operating phase, the first bridge voltage V3 essentially equals 50% of the negated input voltage -Vin, V3≈-Vin/2.

In the first and second operating phases To1, To2 the first rectifier element 41 of the output stage is conducting, and in the third and fourth operating phases To3, To4 the second rectifier element 41 is conducting. If the first and second rectifier elements 41, 42 are active rectifier elements, the switching element of the first rectifier element 41 may be switched in the first and second operating phases, and the switching element of the second rectifier element 42 may be switched on in the third and fourth operating phases. In order to avoid cross currents there may be a delay time between switching off the switching element in one of the two active rectifier elements 41, 42 and switching on the switching element in the other one of the two active rectifier elements. The respective passive rectifier element takes over the current during the delay time.

As can be seen from Figure 7, the output current is a scaled and rectified version of the alternating current I2. The output current Iout increases in the first operating phase To1, decreases in the second operating phase To2 to reaches zero at the end of the second operating phase To2, again increases in the third operating phase To3, and decreases in the fourth operating phase To4 to reach zero at the end of the fourth operating phase.

During the first and second operating phases To1, To2 the second capacitor 24 is charged and during the third and fourth operating phase To3, To4 the second capacitor 24 is discharged. The amount of charge provided to the second capacitor 24 In the first and second operating phases To1, To2 and taken from the second capacitor 24 in the third and fourth operating phases To3, To4, however, can be neglected as compared to the charge already stored in the second capacitor 24, so that the voltage V24 across the second capacitor 24 can be considered to be essentially constant and essentially equal to Vin/2 during the individual operating phase in the activation period.

Durations of the individual operating phases To1-To4 may vary over the startup phase. This is explained with reference to further signal diagrams giving further below.

As explained above, the slope of the first current I2 is dependent on the magnitude of the voltage V32 across the series inductor 32, wherein the magnitude of this voltage V32 decreases over the startup phase. According to one example, the positive maximum Ipk1 remains constant and the negative maximum -Ipk2 remains constant over the startup phase. In this example, the durations of the individual operating phases To1-To4 may increase over the duration of the startup phase.

According to one example, durations of the individual operating phases To1-To4 are in a range of between 10 nanoseconds (ns) and 40 nanoseconds, so that the duration T1 of one activation period 201 is at least between 40 ns and 160 ns.

A burst frequency f3, which is the reciprocal of the duration T3 of one burst cycle 200 is between 400 kHz and 800 kHz, for example, so that the duration T3 of one burst cycle is between 1.25 microseconds ($\mu$s) and 2.5 $\mu$s, for example.

According to one example, controlling operation of the input stage 2 in the startup mode by the control circuit 5 includes monitoring the first current I2 and controlling operation of the first and second electronic switches 21, 22 dependent on the monitored first current I2. In particular, this includes (a) switching on the first electronic switch 21 at the beginning of the activation period 201; (b) switching off the first electronic switch 21 when the first current I2 reaches the positive maximum Ipk1; (c) switching on the second electronic switch 22 after a delay time after the switching of the first electronic switch 21; (d) switching off the second electronic switch 22 when the first current I2 reaches the negative maximum -Ipk2; (e) switching on the first electronic switch 21 after a delay time after switching off the second electronic switch 22; and (f) switching off the first electronic switch 21 when the first current I2 reaches zero.

The process sequence (a)-(f) generates one period of the first current I2 in the activation period 201. As explained above, generating only one period of the first current I2 in each activation period 201 is only an example. According to another example, two or more periods of the first current I2 are generated in each activation period. For this, process sequence (a)-(f) may be repeated one or more times.

According to another example explained in detail herein further below, controlling operation of the input stage 2 in the startup modes includes calculating the durations of the individual operating phases To1-To4 by the control circuit 5 dependent on different operating parameters of the power converter and controlling operation of the electronic switches 21, 22 dependent on the calculated durations To1-To4.

As can be seen from Figure 6, oscillations of the first current I2 and the voltage V22 across the second electronic switch 22 may occur during the deactivation period 202. Such oscillations may be due to parasitic oscillating circuits that include parasitic capacitors (output capacitors) of the electronic switches 21, 22 and the series inductor 32.

In the power converter according to Figure 4, when the input stage 2 is in the first and second operating phases To1, To2, the first alternating current I2 flows in the direction indicated by the arrow and the second alternating current I4 flows in the direction indicated by the arrow in Figure 4. In these operating phases, the second bridge voltage V4 essentially equals 50% of the output voltage Vout, V4≈Vout/2. When the input stage 2 is in the third and fourth operating phases To3, To4, the first current I2 flows in the direction opposite the direction indicated by the arrow and the second current I4 flows in the direction opposite the direction indicated by the arrow. In these operating phases, the second bridge voltage V4 essentially equals 50% of the negated output voltage Vout, V4≈-Vout/2.

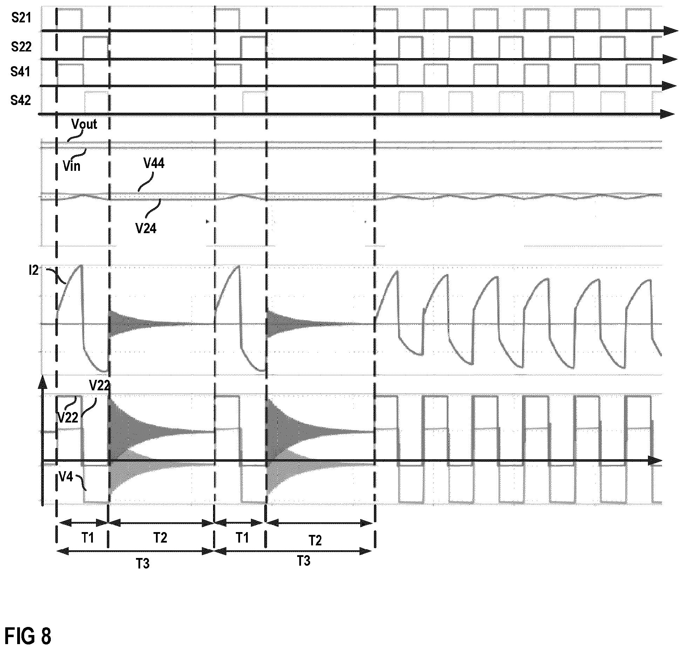

Figure 8 shows signal diagrams that illustrate operation of the power converter towards the end of the startup mode. More specifically, Figure 8 illustrates signal diagrams of the drive signals S21, S22, S41, S42, the output voltage Vout, the input voltage Vin, the voltage V24 across the second capacitor 24 on the primary side, the voltage V44 across the second capacitor on the secondary side, the first current I2, the voltage V22 across the second electronic switch 22, and the second bridge voltage V4. After the startup mode, the power converter may enter a normal operating mode. In the normal operating mode, the first and second electronic switches 21, 22 may be switched on and off alternatingly and at a fixed switching frequency. Alternatively, after the startup phase, the power converter may be operated in a transitional phase. The transitional phase is an operating phase in which the first and second electronic switches 21, 22 are switched on and off at a predefined switching frequency, wherein the switching frequency decreases from a start frequency at the beginning of the transition phase to a final frequency at the end of the transition phase, wherein the final frequency equals the operating frequency in the normal operating mode.

According to one example, operating the power converter in the startup mode ends when the output voltage Vout across the output capacitor 15 has reached a predefined voltage level. The predefined voltage level is a desired voltage level of the output voltage Vout in the normal operating mode, for example. According to another example, the predefined voltage level is a certain percentage, such as between 80% and 100% of the desired voltage level of the output voltage Vout in the normal operating mode.

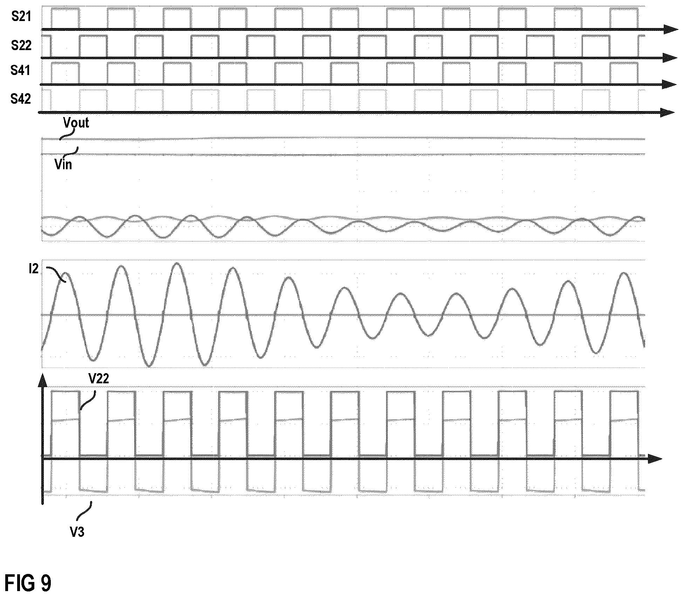

Figure 9 shows signal diagrams that illustrate operation of the power converter in the normal operating mode in which the first and second electronic switches are alternatingly switched on and off at a predefined normal operating mode frequency. In the normal operating mode, a ratio between the output voltage Vout the input voltage Vin is essentially given by the winding ratio n of the transformer 31, for example, and may be varied, albeit in a rather narrow range, by varying switching frequency. The switching frequency in the normal operating mode is in a range of between 400 kHz and 800 kHz, for example.

The power converter according to Figure 4 is a resonant converter, in particular an LLC converter. This power converter includes two inductors, the series inductor 32 and the parallel inductor 33, in addition to the transformer 31. The capacitor of the LLC converter is a split capacitor that is formed by the first and second capacitors 23, 24 of the second bridge circuit in the input stage 2.

Implementing the power converter in the way illustrated in Figure 4 is only an example. Further examples of a power converter that can be started up using a method of the type illustrated herein before are explained in the following.

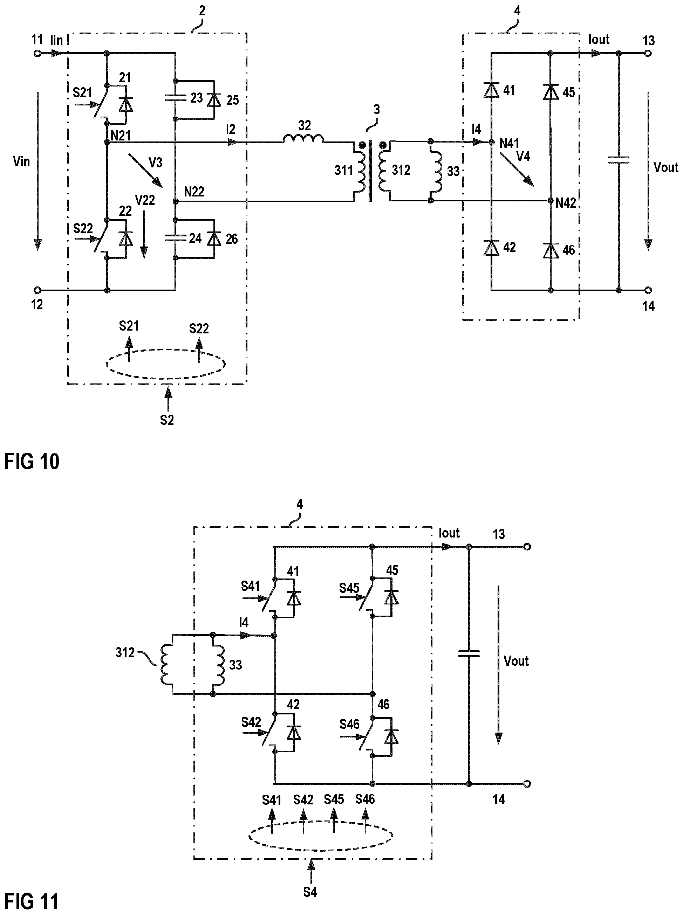

Figure 10 shows a further example of an LLC converter. The LLC converter according to Figure 10 is different from the LLC converter according to Figure 4 in that a rectifier element 25, 26, such as a diode, is connected in parallel with each of the first and second capacitors 23, 24 forming the split capacitor in the input stage 2. The output stage 4 is different from the output stage 4 in that the second half-bridge is a rectifier half-bridge instead of a capacitor half-bridge. The rectifier half-bridge includes a third rectifier element 45 and a fourth rectifier element 46 connected in series between the first and second output nodes 13, 14.

In the converter according to Figure 10, similar to the converter according to Figure 4, the first bridge voltage V3 is either Vin/2 or -Vin/2. Furthermore, in the converter according to Figure 10, different from the converter according to Figure 4, the second bridge voltage V4 essentially equals Vout or -Vout. In the converter according to Figure 4, the output stage has a voltage doubler topology, so that the second bridge voltage V4 essentially equals Vout/2 or -Vout/2.

The output stage 4 shown in Figure 10 is a passive output stage. That is, the rectifier elements 41, 42, 45, 46 are passive rectifier elements. However, implementing the output stage 4 as a passive output stage is only an example. According to another example illustrated in Figure 11, , the output stage 4 is an active output stage that includes active rectifier elements both in the first half-bridge and the second half-bridge. The active rectifier elements are controlled by respective control signals S41, S42, S45, S46 received from the control circuit 5 (not shown in Figure 11). The active rectifier elements 41, 42, 45, 46 may be controlled by the control circuit 5 in a conventional way. For example, this includes controlling the active rectifier elements 41, 42, 45, 46 such that the control circuit 5 switches on the switching element of a respective active rectifier element each time the passive rectifier element of the active rectifier element is forward biased.

Each of the output stages 4 illustrated in Figures 10 and 11 includes a full-bridge with two half-bridges each including two passive rectifier elements (Figure 10) or two active rectifier elements (Figure 11). This type of full-bridge may be referred to as rectifier full-bridge.

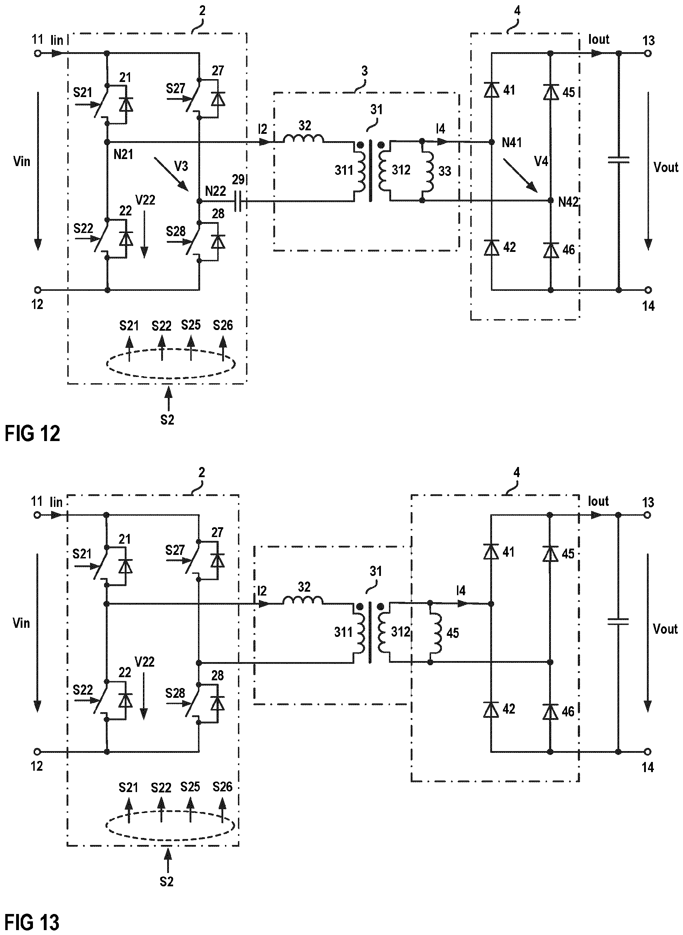

Figure 12 illustrates an LLC power converter according to another example. The power converter according to Figure 12 includes an input stage 2 that is different from the input stage 2 illustrated in Figure 4 in that the second half-bridge is a switch half bridge that includes a third switch 27 and a fourth switch 28 connected in series between the first and second input nodes 11, 12. Instead of a split capacitor, the power converter according to Figure 12 includes a single capacitor 29 connected in series with the primary winding 311 of the transformer 31 and the series inductor 32. The series circuit including the capacitor 29, the series inductor 32 and the primary winding 311 is connected between the taps N21, N22 of the first and second half bridges.

Operating the second input stage 2 according to Figure 12 in the startup mode is very similar to operating the input stage 2 according to Figure 4 in the startup mode. Operating the input stage 2 according to Figure 12 is different from operating the input stage 2 according Figure 4 in that, in the input stage 2 according to Figure 12, the first bridge voltage V3 essentially equals the input voltage Vin or the negated input voltage Vin (instead of Vin/2 or -Vin/2). More specifically, the first bridge voltage V3 essentially equals the input voltage Vin when the first and fourth electronic switches 21, 28 are in the on-state and the second and third electronic switches 22, 27 are in the off-state. The first bridge voltage V3 essentially equals the negated input voltage -Vin when the second and third switches 27, 28 are in the on-state and the first and fourth electronic switches 21, 28 are in the off-state.

Operating the input stage 2 according to Figure 12 in the startup mode is very similar to operating the input stage 2 according to Figure 4. Generating one period of the alternating input voltage V3 in the power converter according to Figure 12 includes operating the input stage 2 in four operating phases as follows.

(i) In the first operating phase To1, the first and fourth electronic switches 21, 28 are in the on-state, so that the first current I2 increases and flows in the direction as indicated by the arrow in Figure 12. The first bridge voltage V3 essentially equals the input voltage Vin, $V3 \approx Vin$. The first operating phase To1 ends when the first current I2 reaches the positive maximum Ipk1.

(ii) In the second operating phase To2, the fourth electronic switch 28 is in the on-state. The second electronic switch 22 may be in the on-state or the rectifier element of the second electronic switch 22 may take over the first current I2. The first current I2 decreases to zero in the second operating phase. The first bridge voltage V3 is essentially zero, $V3 \approx 0$.

(iii) In the third operating phase To3, the second and third electronic switches 22, 27 are in the on-state, so that the first current I2 decreases and flows in the direction opposite the direction as indicated by the arrow in Figure 12. The first bridge voltage V3 essentially equals the negated input voltage, $V3 \approx -Vin$. The third operating phase To3 ends when the first current I2 reaches the negative maximum -Ipk2.

(iv) In the fourth operating phase To4, the third electronic switch 27 is in the on-state. The first electronic switch 21 may be in the on-state or the rectifier element of the first electronic switch 21 may take over the first current I2. The first current I2 decreases to zero in the fourth operating phase To4. The first bridge voltage V3 is essentially zero, $V3 \approx 0$.

Referring to Figure 12, the second output stage 4 may be implemented in the same way as the output stage according to Figure 12. Alternatively (not illustrated) the input stage 4 according to Figure 12 is implemented in the same way as the output stage 4 illustrated in Figure 11 that includes active rectifier elements.

Figure 13 illustrates a power converter according to another example. The power converter according to Figure 13, is based on the power converter according to Figure 12 and is devoid of a capacitor connected in series with the primary winding 311, so that the power converter according to Figure 12 is not a resonant converter. Nevertheless, the operating principle is very similar to the operating principle of the power converter according to Figure 12. In particular the electronic switches 21, 22, 27, 28 are operated in the same way as explained with regard to the power converter according to Figure 12 herein before.

In the power converter according to Figure 13, the output stage 4 is implemented in the same way as the output stage according to Figure 10. This, however, is only an example. It is also possible to implement the output stage 4 according to Figure 13 with active rectifier elements in the same way as the output stage 4 according to Figure 11.

In the power converters according to Figures 12 and 13, the input stage 2 includes a full bridge with two half-bridges that each include two electronic switches 21, 22, 27, 28. A full-bridge of this type may be referred to as switching full bridge.

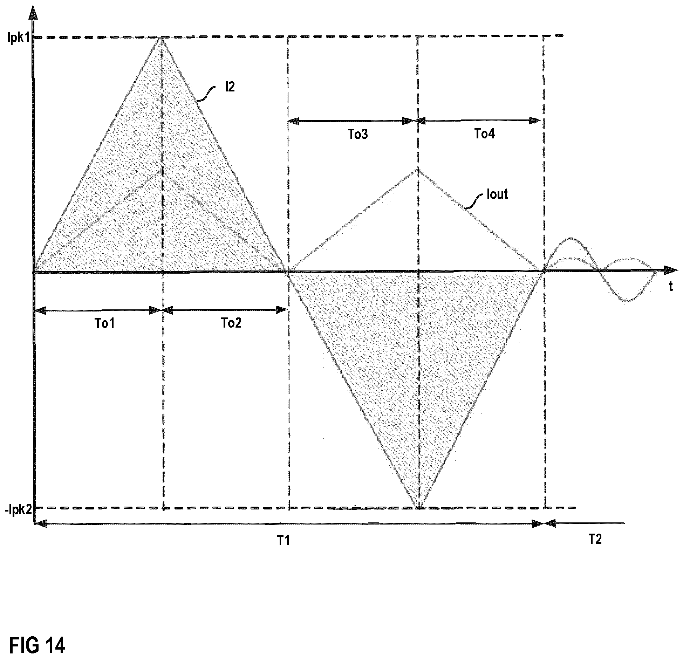

Referring to the above, instead of monitoring the first current I2, for controlling the electronic switches in the input stage 2 it is also possible to calculate the durations of the first, second, third, and fourth operating phases To1, To2, To3, To4 and to control the electronic switches in the input stage 2 in accordance with the calculated durations. Calculating the durations of the operating phases To1-To4 is explained in the following with regard to Figure 14, which shows the first current I2 and the output current Iout during one activation period 201.

The explanation provided in the following relates to a power converter of the type illustrated in Figure 4 in which the first bridge voltage V3 changes between Vin/2 and

- Vin/2 and in which the second bridge voltage V4 changes between Vout/2 and
- Vout/2. More specifically, equations explained in the following relate to a power converter of the type illustrated in Figure 4. These equations, however, can easily be adapted to the power converters according to the further examples explained herein before by taking into account that the first and second bridge voltages V3, V4 may be different in these power converters from the first and second bridge voltages V3, V4 in the power converter according to Figure 4 in the individual operating phases To1, To2, To3, To4.

Referring to the above, when the power converter according to Figure 4 is in the first operating phase To1, the first bridge voltage V3 essentially equals Vin/2 and the second bridge voltage V4 essentially equals Vout/2. Referring to the above, the duration To1 of the first operating phase is the duration it takes for the first current I2 to change from zero to the first (positive) maximum Ipk1. Assuming that the first current I2 increases linearly in the first operating phase the duration To1 of the first operating phase is dependent on the positive maximum Ipk1, the input voltage Vin, the instantaneous output voltage Vout, the inductance L32 of the series inductor 32, and the winding ratio n as follows,

$$To1 = \frac{Ipk1 \cdot L32}{\frac{Vin}{2} - n \cdot \frac{Vout}{2}} \qquad (8a).$$

As can be seen from equation (8a), the higher the positive maximum Ipk1 and/or the inductance L32 the longer the duration To1 (at a given input voltage Vin and a given output voltage). Furthermore, at a given positive maximum Ipk1 and a given inductance L32, the higher the output voltage Vout the longer the duration To1 of the first operating phase.

The duration To2 of the second operating phase is the duration it takes for the first current I2 to decrease from the positive maximum Ipk1 to zero. Assuming that the second current I2 decreases linearly in the second operating phase the duration To2 of the second operating phase is dependent on the positive maximum Ipk1, the input voltage, the instantaneous output voltage, the inductance L32 and the winding ratio as follows,

$$To2 = \frac{Ipk1 \cdot L32}{\frac{Vin}{2} + n \cdot \frac{Vout}{2}} \qquad (8b).$$

As can be seen from equation (8b), the higher the positive maximum Ipk1 and/or the inductance L32 the longer the duration To2 (at a given input voltage Vin and a given output voltage). Furthermore, at a given positive maximum Ipk1 and a given inductance L32, the higher the output voltage Vout the longer the duration To2 of the second operating phase. Furthermore, as can be seen from equations (8a) and (8b), the durations To1, To2 of the first and second operating phases are equal at the beginning of the startup mode, that is, when the output voltage Vout his zero. Over the duration of the startup mode, that is, as the output voltage Vout increases, the duration To2 of the second operating phase decreases relative to the duration To1 of the first operating phase.

Operating the power converter in the third and fourth operating phases To3, To4 is very similar to operating the power converter in the first and second operating phases To1, To2, wherein, in the third and fourth operating phases To3, To4, the first current I2 has a current direction opposite the current direction in the first and second operating phases To1, To2. The duration To3 of the third operating phase is dependent on the inductance L32, the input voltage Vin and the instantaneous value of the output voltage Vout in the same way as the duration To1 of the first operating phase and is proportional to the magnitude Ipk2 of the negative maximum -Ipk2, so that

$$To3 = \frac{Ipk2 \cdot L32}{\frac{Vin}{2} - n \cdot \frac{Vout}{2}} \qquad (8c).$$

Everything explained herein before with regard to the dependency of the duration To1 of the first operating phase on the inductance L32 and the input and output voltages Vin, Vout applies to the dependency of the duration To3 of the third operating phase on the inductance L32 and the input and output voltages Vin, Vout accordingly. Furthermore, the higher the magnitude of the negative maximum -Ipk2 the longer the duration To3.

The duration To4 of the fourth operating phase is dependent on the inductance L32, the input voltage Vin and the instantaneous value of the output voltage Vout in the same way as the duration To2 of the second operating phase and is proportional to the magnitude Ipk2 of the negative maximum -Ipk2, so that

$$To4 = \frac{Ipk2 \cdot L32}{\frac{Vin}{2} + n \cdot \frac{Vout}{2}} \qquad (8d).$$

Everything explained herein before with regard to the dependency of the duration To2 of the second operating phase on the inductance L32 and the input and output voltages Vin, Vout applies to the dependency of the duration To4 of the fourth operating phase on the inductance L32 and the input and output voltages Vin, Vout accordingly. Furthermore, the higher the magnitude of the negative maximum -Ipk2 the longer the duration To4.

Referring to the above, in the power converter according to Figure 4, the second capacitor 24 is charged in the first and second operating phases To1, To2 and is discharged in the third and fourth operating phases To3, To4. According to one example, the power converter is operated such that the amount of charge provided to the second capacitor 24 in the first and second operating phases To1, To2 essentially equals the amount of charge taken from the second capacitor 24 in the third and fourth operating phases To3, T4. This can be achieved by selecting the positive and negative maximum to have the same magnitude, so that Ipk1=Ipk2=Ipk. In this case, as can be seen from equations (8a)-(8d) the durations To1, To3 of the first and third operating phases are essentially equal and the durations To2, To4 of the second and fourth operating phases are essentially equal.

According to one example, the control circuit 5 is configured to monitor the input voltage Vin and the output voltage Vout and either has the inductance value L32 and the desired positive and negative current maximum Ipk1, -Ipk2 stored therein or receives the inductance value L32 and the desired positive and negative current maximum Ipk1, -Ipk2 from a further controller. In this example, the control circuit 5 is configured to calculate the durations To1-To4 in accordance with equations (8a)-(8d) and is configured to control the electronic switches 21, 22 in the input stage 2 in accordance with the calculated durations. In this example, the current I2 is limited to the positive maximum Ipk1 and the negative maximum -Ipk2 by selecting the time durations To1-To4 in accordance with equations (8a)-(8d).

As explained above, equations (8a)-(8d) apply to a power converter of the type illustrated in Figure 4, in which the first bridge voltage V3 is Vin/2 or -Vin/2 and in which the second bridge voltage is Vout/2 or -Vout/2. Equations (8a)-(8d) apply to the other power converters explained herein before accordingly, wherein Vin/2 is to be replaced by Vin when the respective power converter includes a switching full-bridge in the input stage 2 instead of the switching stage illustrated in Figure 4 for generating the first bridge voltage V3. Furthermore, Vout/2 is to be replaced by Vout when the respective power converter includes a rectifier full-bridge in the output stage 4 instead of the rectifier stage illustrated in Figure 4.

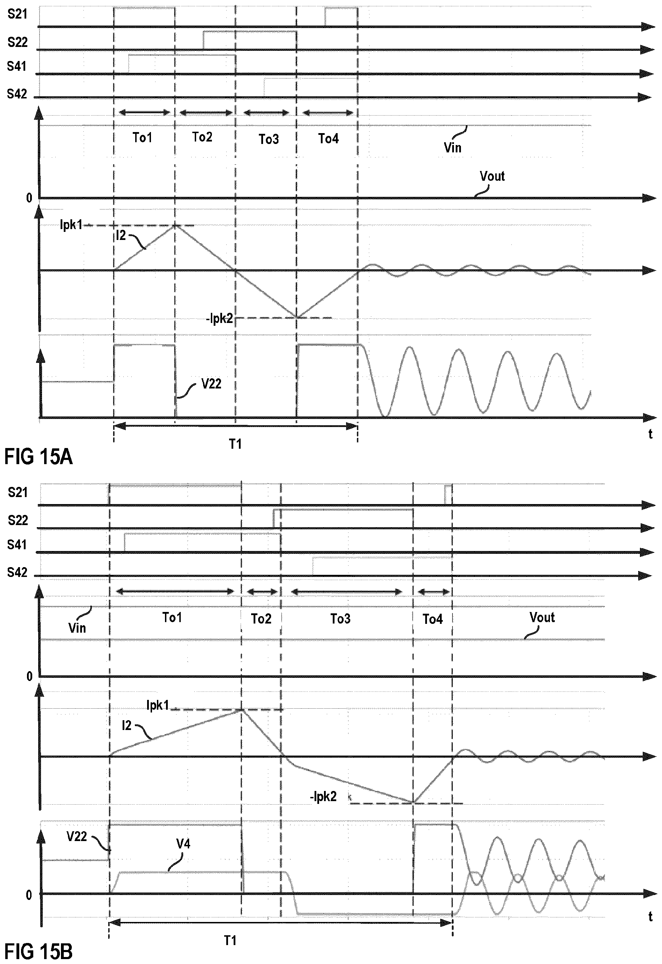

Referring to the above, the time durations To1-T4 are dependent on the instantaneous value of the output voltage Vout. This is illustrated in Figures 15A-15C, which each illustrate signal diagrams of the signals illustrated in Figures 6 and 7 during one activation period 201 in the startup mode at different values of the output voltage Vout. The winding ratio n is n=8/9 in these examples. Magnitudes of the positive and negative current maxima Ipk1, -Ipk2 are equal in these examples.

In the example illustrated in Figure 15A, the output voltage Vout is 0. In this example, the durations To1, To3 of the first and third operating phases are equal and the durations To2, To4 of the second and fourth operating phases are equal.

In the example illustrated in Figure 15B, the output voltage Vout is about 50% of the output voltage Vout in the normal operating mode. As can be seen, the durations To1, To3 are longer in the example illustrated in Figure 15B than in the example illustrated in Figure 15A. Furthermore, the durations To2, To4 of the second and fourth operating phases have become shorter than the durations To1, To3 of the first and third operating phases. Furthermore, in the example illustrated in Figure 15B, the duration T1 of the activation period has become longer than in the example according to Figure 15A. This is a consequence of a dependency of the time durations To1-To4 on the output voltage Vout as explained with reference to equations (8a)-(8d).

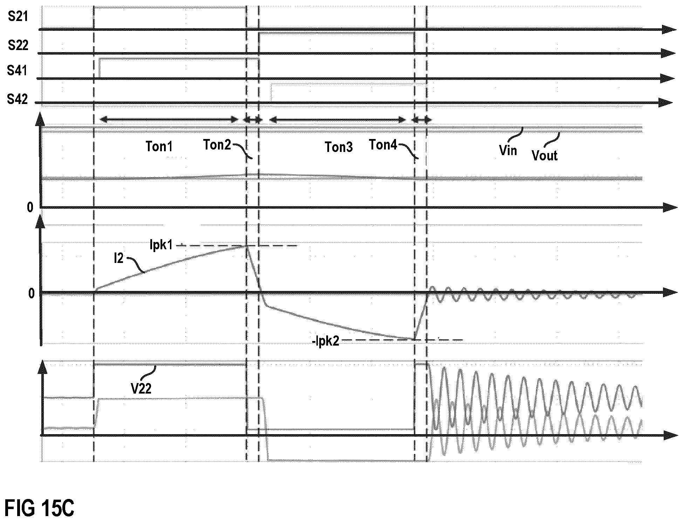

In the example illustrated in Figure 15C, the voltage level of output voltage Vout essentially equals the voltage level of the output voltage Vout in the normal operating mode. As can be seen, the durations To1, To3 of the first and third operating phases in this example are even longer than in the example illustrated in Figure 15B. Furthermore, the durations To2, To4 of the second and fourth operating phases are shorter than in the example illustrated in Figure 15B.

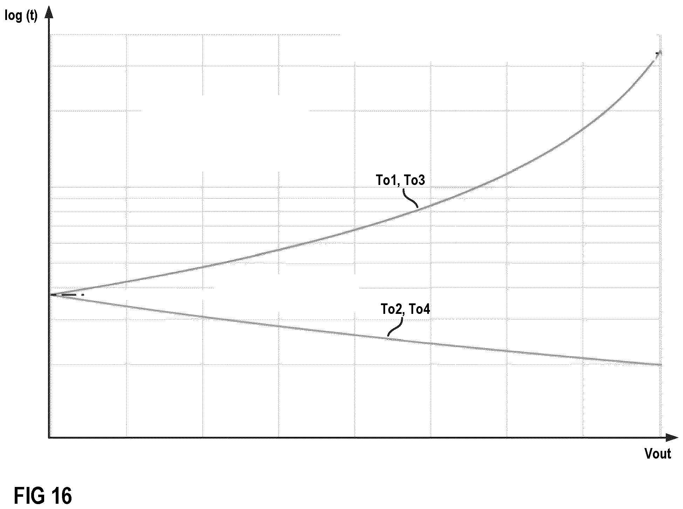

The dependency of the durations To1-To4 of the individual operating phases on the output voltage Vout is also illustrated in Figure 16. Figure 16 illustrates the time durations To1-To4 on a logarithmic scale over the output voltage Vout. As can be seen from Figure 16, the time durations To1, To3 of the first and third operating phases increase as the output voltage Vout increases, and the time durations To2, To4 of the second and fourth operating phases decrease as the output voltage Vout increases. The increase of the time durations To1, To3 of the first and third operating phases is stronger than the decrease of the time durations To2, To4 of the second and fourth operating phases, so that the activation duration T1 increases as the output voltage Vout increases. Referring to equations (8a)-(8d), the time durations To1-To4 of the individual operating phases are dependent on the input voltage Vin, the instantaneous voltage level of the output voltage Vout, the inductance L32, and the desired peak currents Ipl1, -Ipk2, wherein the latter may have the same magnitude.

According to one example, the control circuit 5 is configured to calculate the time durations To1-To4 based on the individual operating parameters Vin, Vout, L32, Ipk1, -Ipk2 in accordance with equations (8a)-(8d) and control the power converter accordingly. According to another example, the control circuit 5 includes at least one lookup table in which values that represent the time durations To1-To4 are stored for a plurality of different voltage levels of the output voltage Vout, and the control circuit 5 is configured to receive a measurement value representing the output voltage Vout and retrieve the associated time durations for controlling the power converter from the lookup table.

According to one example, the input voltage Vin, the peak currents Ipk1, -Ipk2, and the inductance L32 are fixed so that there is only one lookup table that assigns each of the plurality of voltage levels of the output voltage Vout to a respective set of time durations To1-To4. According to another example, different values of the input voltage Vin may occur. In this example, the control circuit 5 includes a respective lookup table for each of the individual voltage levels of the input voltage Vin. In each case, the time durations stored in the lookup table can be obtained based on equations, such as equations(8a)-(8d), based on numerical calculations, or based on computer-based simulations of the power converter.

Referring to the above, in a power converter of the type illustrated in Figure 4, charges in the first and second capacitors 23, 24 can be balanced by selecting the positive and negative maxima Ipk1, - Ipk2 to have the same magnitude, so that the power converter is operated in first and third operating phases for the same durations, To1=To3, given by equation (8a) or equation (8c) and is operated in the second and fourth operating phases for the same durations, To2=To4, given by equation (8b) or equation (8d).

Equations (8a)-(8d), however, do not consider a magnetizing current of the transformer 31. When operating the power converter in accordance with equations (8a)-(8d) the magnetizing current may result in a charge imbalance of the capacitors 43, 44 in the output stage 4 on the secondary side.

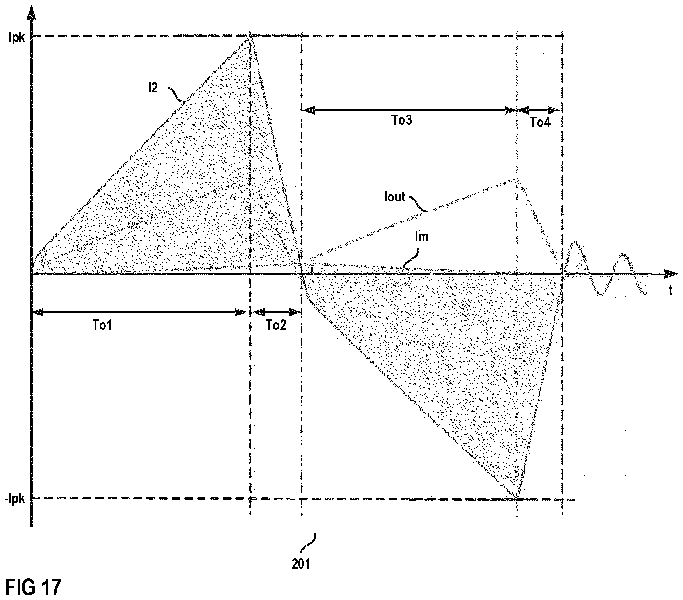

Figure 17, in addition to the second current I2 and the output current Iout, illustrates a magnetizing current Im during one activation period 201 in the startup mode. As can be seen, the magnetizing current Im increases in the first and second operating phases To1, To2 and decreases in the third and fourth operating phases To3, To4.

A charge imbalance in the capacitors 43, 44 on the secondary side caused by the magnetizing current Im can be avoided when adjusting the first and third time durations To1, To3 to be equal and in accordance with one of equations (8a) or (8c), where Ipk1=Ipk2, and when adjusting the second and fourth time durations To2, To4 in accordance with

$$To2 = To4 = \frac{2 \cdot Ipk \cdot L32 \cdot F1}{(Vin - n \cdot Vout) \cdot F2} \tag{9a},$$

where

$$F1 = Lm \cdot (Vin - n \cdot Vout) - L32 \cdot n \cdot Vout \tag{9b},$$

and

$$F2 = Lm \cdot (Vin + n \cdot Vout) + L32 \cdot n \cdot Vout \tag{9c},$$

where Ipk denotes the magnitude of the positive and negative maximum current Ipk1, -Ipk2, L32 denotes the inductance of the series inductor, Vin denotes the input voltage, Vout denotes the instantaneous value of the output voltage, and Lm denotes the magnetizing inductance. The magnetizing inductance is represented by the parallel inductor 33 and the self-inductance of the secondary winding 312 when the parallel inductor 33 is a discrete external inductor. According to another example, the parallel inductor 33 is not an external device but represents the self-inductance of the secondary winding 312. In this example, the magnetizing inductance is represented by the parallel inductor 33.

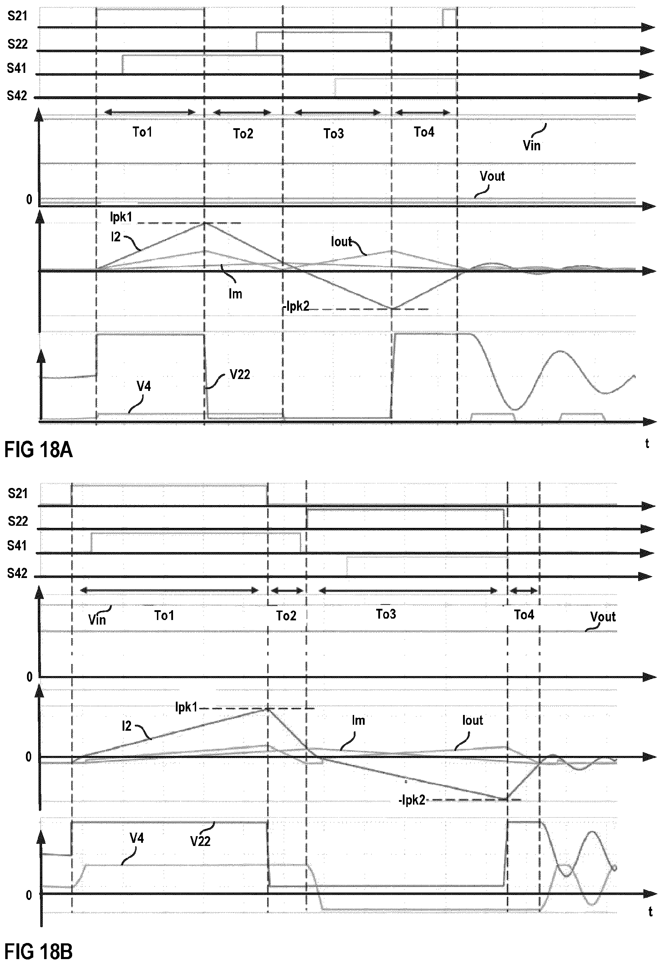

The time durations To1-To4 calculated in accordance with equations (8a), (8c) and (9a)-(9c) are dependent on the instantaneous value of the output voltage Vout. This is illustrated in Figures 18A and 18B, which each illustrate signal diagrams of the signals illustrated in Figures 6 and 7 during one activation period 201 in the startup mode at different values of the output voltage Vout. The winding ratio n is n=8/9 in these examples.

In the example illustrated in Figure 18A, the voltage level of the output voltage Vout is about 5% of the voltage level of the output voltage Vout in the normal operating mode. In the example illustrated in Figure 18B, the voltage level of the output voltage Vout is about 60% of the voltage level of the output voltage Vout in the normal operating mode. In this example, the first and third time durations To1, To3 are longer than in the example according to Figure 18A, and the second and fourth time durations To2, To4 are shorter than in the example illustrated in Figure 18A.

When taking into account the magnetizing current Im, it should be noted that the alternating current I2 not necessarily decreases to zero in the second operating phase To2 and, therefore, not necessarily starts to increase at zero in the third operating phase To3. Thus, in this case, the second operating phase To2 not necessarily ends when the alternating current I2 has reached zero and the third operating phase To3 not necessarily starts when the decreasing alternating current I2 has reached zero. Instead, as illustrated in Figures 17, 18A and 18B, the second operating phase To2 and the third operating phase To3 starts when the alternating current I2 crosses the magnetizing current Im.

In the event that the output stage 4 is implemented with passive rectifier elements the control circuit 4, for controlling operation of the input stage 2, only requires information on the overall duration of the first and second operating phases To2, To3 in order to be able to start the fourth operating phase To4 at the correct time instance. If, however, the output stage 4 is implemented with active rectifier elements the duration of both the first operating phase To2 and the third operating phase To3 is required in order to be able to suitably control operation of the active rectifier elements in the output stage output stage 4.

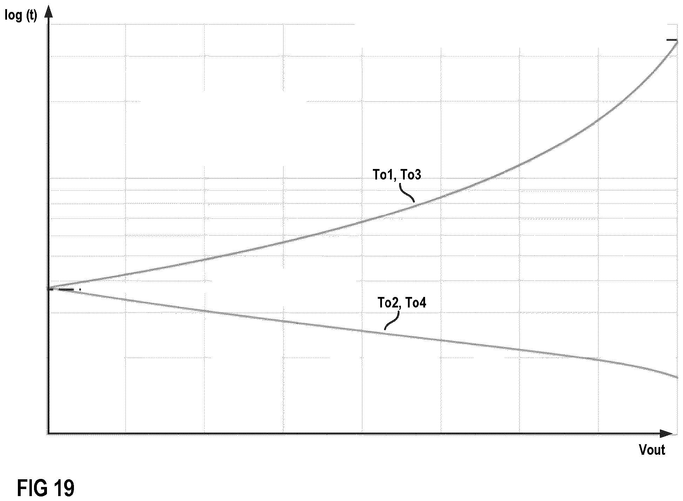

The dependency of the durations To1-To4 of the individual operating phases on the output voltage Vout is also illustrated in Figure 19. Figure 19 illustrates the time durations To1-To4 on a logarithmic scale over the output voltage Vout. As can be seen from Figure 19, the time durations To1, To3 of the first and third operating phases increase as the output voltage Vout increases, and the time durations To2, To4 of the second and fourth operating phases decrease as the output voltage Vout decreases. The increase of the time durations To1, To3 of the first and third operating phases is stronger than the decrease of the time durations To2, To4 of the second and fourth operating phases, so that the activation duration T1 increases as the output voltage Vout increases.

According to one example, the control circuit 5 is configured to calculate the time durations To1-To4 based on the individual operating parameters Vin, Vout, L32, Ipk1, -Ipk2 in accordance with equations (9a)-(9c) and control the power converter accordingly. According to another example, the control circuit 5 includes at least one lookup table in which values that represent the time durations To1-To4 dependent on at least the voltage level of the output voltage Vout are stored. The values stores in the lookup table may be based on calculations in accordance with equation (9a)-(9c), numerical calculations, or computer-based simulations of the power converter.

As explained above, in a power converter of the type illustrated in Figure 4, a charge imbalance may occur in the capacitor half bridge the output stage 4. In this type of power converter, a charge imbalance, due to the magnetizing current, may also occur in the capacitors 23, 24 of the capacitor half-bridge in the input stage 2. Such charge imbalance may have the effect that the magnitude of the first bridge voltage V3 may significantly deviate from 50% of the magnitude of the input voltage. Thus, the voltage V32 across the series inductor may become much higher than desired, which may result in a higher magnitude of the first current I2, so that the transformer 31 may saturate.

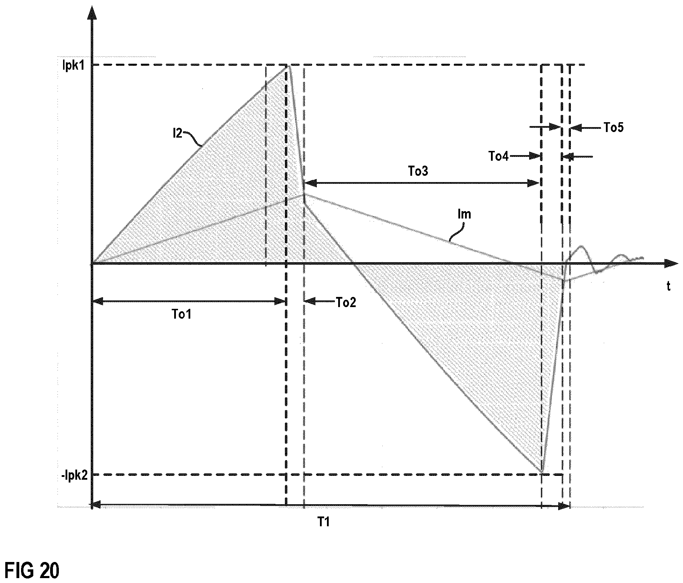

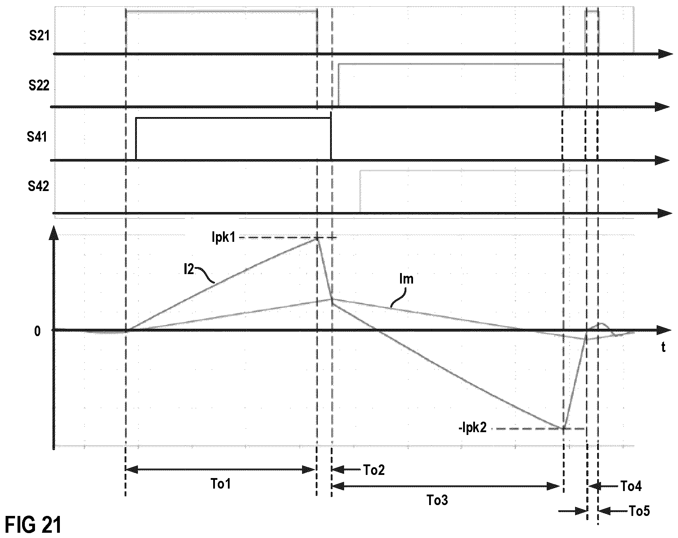

Figures 20 and 21 illustrate one example for operating the power converter in the startup mode such that charges stored in and voltages across the capacitors 23, 24 in the input stage 2 are at least approximately balanced. More specifically, Figures 20 and 21 illustrate signal diagrams of the first alternating current I2 and the magnetizing current Im in one activation period T1. Figure 21, in addition to the first alternating current I2 and the magnetizing current Im, illustrates drive signals S21, S22, S41, S42 of the electronic switches 21, 22, 41, 42 in the input stage 2 and the output stage 4.

In the method illustrated in Figures 20 and 21, one period of the first alternating current I2 is in the activation period T1 of the burst cycle. In this method, generating one period of the alternating input current I2 includes operating the input stage 2 in five different operating phases. These operating phases include the first operating phase To1 in which the current I2 increases from zero to the first maximum Ipk1 and in which the first electronic switch 21 is in the on-state and the second electronic switch 22 is in the off-state; the second operating phase To2 in which the current I2 decreases, the first electronic switch 21 is in the off-state and the second electronic switch 22 may be in the on-state; the third operating phase To3 in which the current I2 decreases to the second maximum -Ipk; the fourth operating phase To4 in which the second electronic switch 22 is in the off-state and the current I2 increases from the negative second maximum -Ipk2 to zero. In addition to the first to fourth operating phases To1-To4 generating one period of the alternating current I2 in the method according to Figures 20 and 21 further includes a fifth operating phase To5. In this operating phase, the alternating current I2 is positive and increases from zero. The first electronic switch 21 is in the on-state during the fifth operating phase To5.

In the method illustrated in Figures 20 and 21, like in the method explained with reference to Figures 17, 18A, 18B, the second operating phase To2 ends and the third operating phase To3 starts when the current I2 reaches the magnetizing current Im.

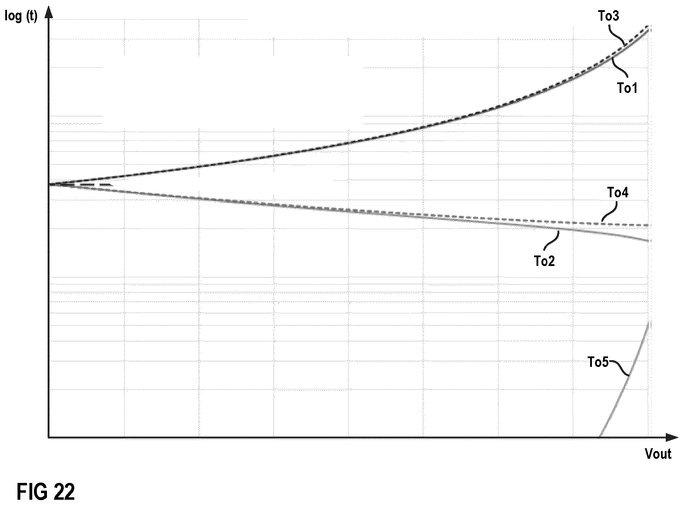

The durations of the individual operating phases To1-To5 is dependent on the output voltage Vout. This is illustrated in Figure 22 which illustrates the durations of the individual operating phases dependent on the output voltage Vout. As can be seen from Figure 22, durations To1, To3 of the first and third operating phases are not equal in this method, wherein a time difference between these durations To1, To3 increases as the output voltage Vout increases. Furthermore, durations To2, To4 of the second and fourth operating phases are not equal in this method, wherein a time difference between these durations To2, To4 increases as the output voltage Vout increases. Furthermore, the time duration To5 of the fifth operating phase is very small at the beginning of the startup phase and only has a significant duration towards the end of the startup phase, that is, when the output voltage Vout is at least 70% or at least 80% of the desired output voltage level.

In the method illustrated in Figures 20-23 equations for calculating the durations To1-To5 of the individual operating phases are difficult and lengthy. According to one example, these equations are implemented in the control circuit 5 and the control circuit 5 is configured to calculate the durations during operation of the power converter dependent on the voltage level of the output voltage Vout and the further operating parameters, such as the voltage level of the input voltage Vin the inductance L32 and the magnetizing inductance Lm. According to another example, these durations are obtained based on numerical calculations or based on computer simulations of the power converter dependent on the individual operating parameter, and these durations are stored in a lookup table from which the control circuit 5 retrieves these durations during operation of the power converter.

It should be noted that in a power converter of the type illustrated in Figure 4 charge balance can only be achieved either in the capacitors of the capacitor half-bridge in the input stage 2 or in the capacitors of the capacitor half-bridge in the output stage 4.

According to one example, after operating the power converter in the startup mode, the power converter is operated in a normal operating mode. Operating the power converter in the normal operating mode may include operating the first and second electronic switches 21, 22 of the input stage 2 at a predefined switching frequency, with duty cycle of essentially 50%, and such that the first and second switches 21, 22 alternatingly are in the on-state. There may be a dead time between switching off one of the switches 21, 22 and a switching on the other one of the switches 21, 22 in order to avoid a cross current, so that the duty cycle may be slightly less than 50%. According to one example, the switching frequency is fixed and adapted to the characteristic of the transformer 31. According to another example. The switching frequency may be varied by the control circuit 5 in a predefined frequency range in order to adjust a power transfer ratio within a certain range.

According to one example, changing operation of the power converter from the startup mode to the normal operating mode includes monitoring the output voltage Vout and changing the operating mode from the startup mode to the normal operating mode when a voltage level of the output voltage Vout reaches a predefined voltage threshold.

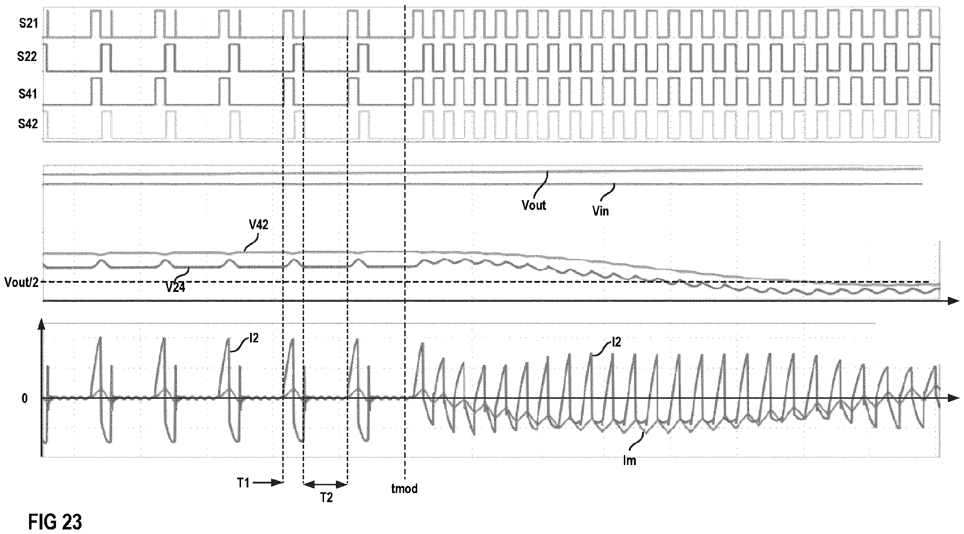

Figure 23 show signal diagrams over a time period in which the operating mode of the power converter changes from the startup mode to the normal operating mode. In Figure 23, tmod denotes the time instance at which the operating mode changes. Before the time instance tmod the power converter is in the startup mode in which the power converter is operated in a plurality of successive burst cycles that each include an activation period T1 and a deactivation period T2. in the example illustrated in Figure 23, one period of the alternating first current I2 is generated in each of the activation periods T1.

As explained above, a charge imbalance may occur in capacitor half-bridges in the input stage 2 and the output stage 4 of a power converter of the type illustrated in Figure 4. This may have the effect that towards the end of the startup mode voltages V23, V24 across the capacitors 23, 24 in the input stage 2 are not equal and/or voltages V43, V44 across capacitors 43, 44 and the output stage and not equal. A slight imbalance may even occur when the first alternating current In2 is generated in accordance with any of the methods illustrated in Figures 17 and 20 that strive to avoid such imbalance.

In the example illustrated in Figure 23 capacitor voltages both in the input stage 2 and the output stage 4 are imbalanced. This includes, for example, that the voltage V24 across the second capacitor 24 in the input stage 2 is higher than 50% of the input voltage Vin and the voltage V42 across the second capacitor 42 in the output stage 4 is higher than 50% of the output voltage Vout. At the beginning of the normal operating mode, such charge imbalance may result in high current peaks of the current I2 and a DC offset of the magnetizing current Im. Such current peaks of the first current I2 and a DC offset of the magnetizing current Im is clearly with visible in Figure 23.

The DC offset of the magnetizing current Im, in particular, is undesirable as such DC offset may result in a saturation of the transformer 31, which may negatively affect operation of the power converter.

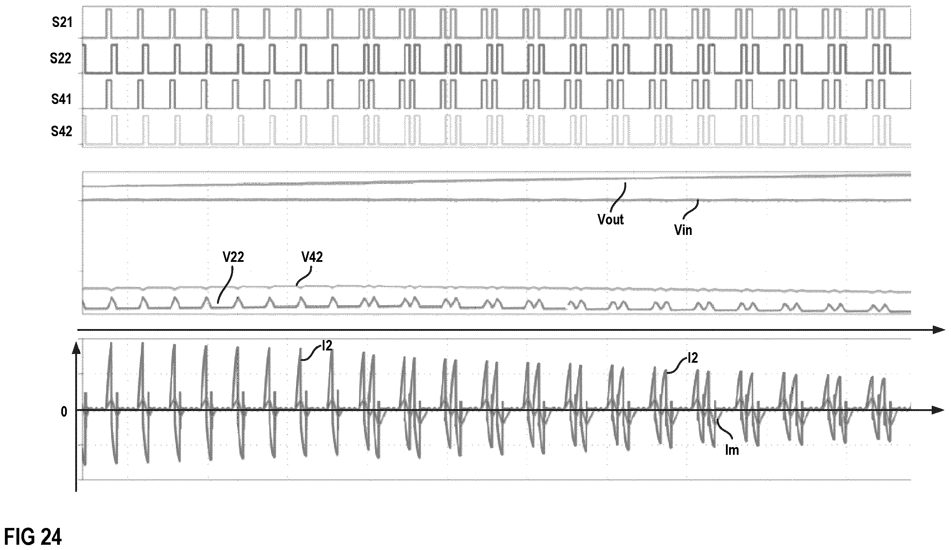

According to one example, in order to balance the charges in the capacitors of the input stage 2 and/or the output stage 4 towards the end of the startup mode includes to increase the number of periods of the first alternating current I2 that are generated in each burst. This is illustrated in Figure 24 that shows signal diagrams of the drive signals S21, S22, S41, S42, the input voltage Vin, the output voltage Vout, the capacitor voltages V24, V42 across the second capacitors 24, 42 in the input stage 2 and the output stage 4, the first current I2, and the magnetizing current Im. In the method illustrated in Figure 24, operating the power converter in the startup mode includes operating the power converter such that, at first, one period of the alternating current I2 is generated in each burst cycle. As can be seen, this may result in a charge imbalance. The power converter is then operated such that in each burst cycle two periods of the alternating current I2 are generated, which improves charge balancing in the input stage 2 and the output stage 4. In Figure 24 this is visible as a reduction of the voltage V42 across the second capacitor 42 when operating the power converter changes from generating one period to generating two periods of the current I2 in each burst cycle.

According to one example, the number of periods of the current I2 that are generated in each burst cycle increases from 1 to n towards the end of the startup mode, wherein n is selected from between 2 and 5, for example. The different operating modes may be referred to as one period mode, two period mode, ... n period mode in the following.

According to one example, changing between the different period modes is dependent on the output voltage Vout. That is, each of these period modes is as associated with a respective output current range and the power converter is operated in the respective period mode when the output voltage Vout is in the respective output current range, wherein the higher the output voltage the more periods of the current I2 are generated in each burst cycle. In each case, the durations To1-To4 or T01-To5 of the individual operating phases for generating one period of the alternating current I2 are obtained in accordance with any of the of the examples explained herein above.

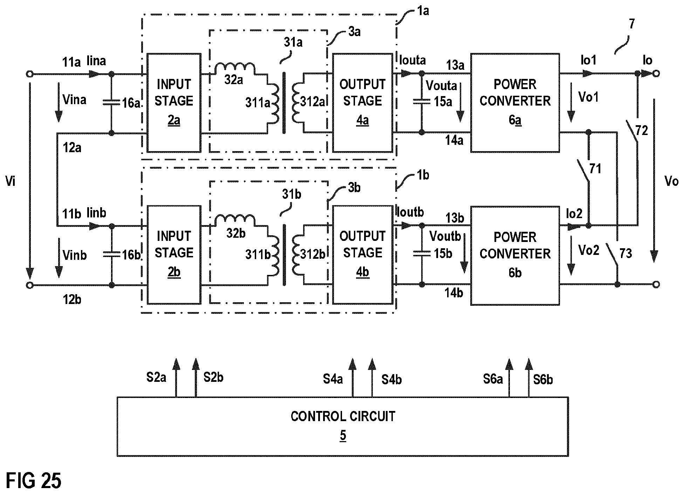

Figure 25 illustrates one across example of a power converter arrangement that includes two power converters, a first power converter 1a and a second power converter 1b, of the type explained herein before and that is configured to precisely adjust an output voltage Vo provided by the power converter arrangement. In the power converter arrangement according to Figure 25, each of the first and second power converters 1a, 1b receives a respective input voltage Vina, Vinb. According to one example, each of the input voltages Vina, Vinb is a portion of an input voltage Vi received by the power converter arrangement. According to one example, each of the input voltages Vina, Vinb is a voltage across an input capacitor 16a, 16b of the respective power converter.

Referring to Figure 25, each of the power converters 1a, 1b is implemented in accordance with the example illustrated in Figure 1 and includes an input stage 2a, 2b, a transformer circuit 3a, 3b with a transformer 31a, 31b and a series inductor 32a, 32b, and an output stage 4a, 4b. The input stages 2a, 2b can be implemented in accordance with any of the examples of the input stage 2 explained herein before, and the output stages 4a, 4b can be implemented in accordance with any of the examples of the output stage 4 explained herein before.

Referring to Figure 25, the power converter arrangement includes two further power converters, a third power converter 6a having an input connected to an output 13a, 14a of the first power converter 1a to receive an output voltage Vouta from the first power converter 1a, and a fourth power converter 6b having an input connected to an output 13b, 14b of the second power converter 1b to receive an output voltage Voutb from the second power converter 1b. The third power converter 6a is configured to provide a regulated first output voltage Vo1 based on the output voltage Vouta received from the first power converter 1a, and the fourth power converter 6b is configured to provide a regulated second output voltage Vo2 based on the output voltage Voutb received from the second power converter 1b. According to one example, the third and fourth power converters 6a, 6b are non-isolated power converters. According to one example, the third and fourth power converters 6a, 6b are power converters of the same type. According to one example, the third and fourth power converters 6a, 6b are either buck converters or boost converters.

Referring to Figure 25, the overall output voltage Vo of the power converter arrangement is based on the first and second output voltages Vo1, Vo2 of the third and fourth power converters 6a, 6b. The outputs of the third and fourth power converters 6a, 6b may be connected in parallel or may be connected in series. The outputs of the third and fourth power converters 6a, 6b can be hard-wired to be connected in parallel or in series. When the outputs of the third and fourth power converters 6a, 6b are connected in series, the overall output voltage Vo equals the sum of the first and second output voltages Vo1, Vo2, Vo=Vo1+Vo2. When the outputs are connected in parallel, the overall output voltage Vo and the first and second output voltages are equal, Vo=Vo1=Vo2, and an overall output current Io is given by the sum of output currents Io1, Io2 of the third and fourth power converters 6a, 6b.

According to one example illustrated in Figure 25, the power converter arrangement includes a switch circuit 7 connected between the output of the third and fourth power converters 6a, 6b and the output of the power converter arrangement. The switch circuit 7 includes switches and 71, 72, 73 and is configured to either connect the outputs of the power converters 6a, 6b in parallel (by switching on switches 72, 73 and switching off switch 71) or in series (by switching on switch 71 and switching off switches 72, 73).

Using a power converter arrangement of the type illustrated in Figure 25, the output voltage Vo of the power converter arrangement can be varied over a wide range. Furthermore, due to the first and second power converters 1a, 1b a galvanic isolation is provided between the input and the output of the power converter arrangement.

According to one example, the control circuit 5 is configured to control operation of the input stages 2a, 2b, the output stages 4a, 4b and the further power converters 6a, 6b by providing respective control signals S2a, S2b, S4a, S4b, S6a, S6b.

Some of the aspects explained above are briefly summarized in the following with reference to numbered examples.

Example 1. A method, including: operating a power converter in a startup mode, wherein the power converter includes: an input configured to receive input power; an output configured to provide output power; an input stage connected to the input; an output stage connected to the output; and a transformer circuit, wherein the transformer circuit includes a primary winding coupled to the input stage and a secondary winding coupled to the output stage, wherein operating the power converter in the startup mode includes operating the power converter in a plurality of burst cycles, wherein operating the power converter in each burst cycle includes activating the input stage for an activation period and deactivating the input stage for a deactivation period, wherein a duration of the deactivation period is at least 5 times a duration of the activation period.

Example 2. The method according to example 1, wherein the input stage includes at least two electronic switches, wherein activating the input stage includes operating each of the at least two electronic switches in an on-state at least once during the activation period, and wherein deactivating the input stage includes operating each of the at least two electronic switches in an off-state throughout the deactivation period.

Example 3. The method according to example 1 or 2, wherein activating the input stage for the activation period includes generating at least one period of a first alternating current provided by the input stage to the transformer circuit.

Example 4. The method according to example 3, wherein generating the at least one period of the first alternating current includes generating exactly one period of the first alternating current.

Example 5. The method according to example 3 or 4, wherein generating each period of the first alternating current includes: operating the input stage in a first operating phase in which the first alternating current approaches a first maximum; and operating the input stage in a third operating phase in which the first alternating current approaches a second maximum having a polarity opposite the polarity of the first maximum.

Example 6. The method according to example 5, wherein magnitudes of the first maximum and the second maximum are at least approximately equal.

Example 7. The method according to example 5 or 6, wherein operating the input stage in the first operating phase includes monitoring the first alternating current and ending the first operating phase when the monitored first alternating current reaches the first maximum, and wherein operating the input stage in the third operating phase includes monitoring the first alternating current and ending the second operating phase when the monitored first alternating current reaches the second maximum .

Example 8. The method according to example 5 or 6, wherein operating the input stage in the first operating phase includes calculating a first duration of the first operating phase dependent on a magnitude of the first maximum and operating the input stage and the first operating phase for the calculated duration of the first operating phase, and wherein operating the input stage in the third operating phase includes calculating a duration of the third operating phase dependent on a magnitude of the second maximum and operating the input stage in the third operating phase for the calculated duration of the third operating phase.

Example 9. The method according to any one of examples 5 to 8, wherein generating each period of the first alternating current further includes: operating the input stage in a second operating mode in which the first alternating current changes from the first maximum towards zero; and operating the input stage in a fourth operating mode in which the first alternating current changes from the second maximum towards zero.

Example 10. The method according to example 9, wherein operating the input stage in the second operating phase includes monitoring the first alternating current and ending the second operating phase when the monitored first alternating current reaches zero; and wherein operating the input stage in the fourth operating phase includes monitoring the first alternating current and ending the fourth operating phase when the monitored first alternating current reaches zero.

Example 11. The method according to example 9, wherein operating the input stage in the second operating phase includes calculating a duration of the second operating phase dependent on a magnitude of the first maximum and operating the input stage in the second operating phase for the calculated duration of the second operating phase, and wherein operating the input stage in the fourth operating phase includes calculating a duration of the fourth operating phase dependent on a magnitude of the second maximum and operating the input stage in the fourth operating phase for the calculated duration of the fourth operating phase.

Example 12. The method according to any one of the preceding examples, further including: monitoring an output voltage of the power converter; and stopping to operate the power converter in the startup mode when the monitored output voltage reaches a predefined voltage threshold.

Example 13. The method according to example 12, further including: operating the power converter in a normal operating mode after the startup mode, wherein operating the power converter in the normal operating mode includes operating the input stage in a plurality of successive activation cycles.

Example 14. The method according to any one of the preceding examples, wherein the input stage includes a first half bridge having a first tap and a second half-bridge having a second tap, wherein the transformer circuit is connected between the first and second taps, and wherein the first half-bridge is a switch half-bridge including a first electronic switch and a second electronic switch.

Example 15. The method according to example 14, wherein the second half-bridge is a capacitor half-bridge with a first capacitor and a second capacitor.

Example 16. The method according to example 14, wherein the second half-bridge is a switch half-bridge with a third electronic switch and a fourth electronic switch.

Example 17. The method according to any one of the preceding examples, wherein the output stage includes a rectifier circuit configured to rectify a second alternating current provided by the secondary winding of the transformer.

Example 18. The method according to any one of the preceding examples, wherein the transformer circuit further includes: a series inductor connected in series with the primary winding.

Example 19. The method according to example 18, wherein an inductance of the series inductor is in a range of between 50 nanohenries and 300 nanohenries.

Example 20. The method according to example 18 or 19, wherein the transformer is an ideal transformer, and wherein the series inductor and the transformer are formed by the same real transformer.

Example 21. A control circuit configured to operate a power converter in a startup mode, wherein to operate the power converter in the startup mode includes to operate the power converter in a plurality of burst cycles, wherein to operate the power converter in each burst cycle includes to activate the input stage for an activation period and deactivate the input stage for a deactivation period, wherein a duration of the deactivation period is at least 5 times a duration of the activation period.

Example 22. An executable program code including instructions which, when executed by a control circuit including a microcontroller, to cause the control circuit to carry out the method according to any one of examples 1 to 20.

**Claims**

1. A method, comprising:

   operating a power converter in a startup mode,
   wherein the power converter comprises:

an input (11, 12) configured to receive input power;
an output (13, 14) configured to provide output power;
an input stage (2) connected to the input (11, 12);
an output stage (4) connected to the output (13, 14); and
a transformer circuit (3),
wherein the transformer circuit (3) comprises a primary winding (311) coupled to the input stage (2) and a secondary winding (312) coupled to the output stage (4),
wherein operating the power converter in the startup mode comprises operating the power converter in a plurality of burst cycles (200),
wherein operating the power converter in each burst cycle includes activating the input stage (2) for an activation period (201) and deactivating the input stage (2) for a deactivation period (202),
wherein a duration (T2) of the deactivation period (202) is at least 5 times a duration (T1) of the activation period (201).

2. The method according to claim 1,

wherein the input stage (2) comprises at least two electronic switches (21, 22),
wherein activating the input stage (2) comprises operating each of the at least two electronic switches (21, 22) in an on-state at least once during the activation period, and
wherein deactivating the input stage (2) comprises operating each of the at least two electronic switches (21, 22) in an off-state throughout the deactivation period.

3. The method according to claim 1 or 2,
wherein activating the input stage (2) for the activation period (201) comprises generating at least one period of a first alternating current (I2) provided by the input stage (2) to the transformer circuit (3).

4. The method according to claim 3,
wherein generating the at least one period of the first alternating current (I2) comprises generating exactly one period of the first alternating current (I2).

5. The method according to claim 3 or 4, wherein generating each period of the first alternating current (I2) comprises:

operating the input stage (2) in a first operating phase (To1) in which the first alternating current (I2) approaches a first maximum (Ipk1); and
operating the input stage (2) in a third operating phase (To3) in which the first alternating current (I2) approaches a second maximum (-Ipk2) having a polarity opposite the polarity of the first maximum (Ipk1).

6. The method according to claim 5,
wherein magnitudes of the first maximum (Ipk1) and the second maximum (-Ipk2) are at least approximately equal.

7. The method according to claim 5 or 6,

wherein operating the input stage (2) in the first operating phase (To1) comprises monitoring the first alternating current (I2) and ending the first operating phase (To1) when the monitored first alternating current (I2) reaches the first maximum (Ipk1), and
wherein operating the input stage (2) in the third operating phase (To3) comprises monitoring the first alternating current (I2) and ending the second operating phase (To3) when the monitored first alternating current (I2) reaches the second maximum

(-Ipk2).

8. The method according to claim 5 or 6,

wherein operating the input stage (2) in the first operating phase (To1) comprises calculating a first duration of the first operating phase (To1) dependent on a magnitude of the first maximum (Ipk1) and operating the input stage (2) and the first operating phase for the calculated duration of the first operating phase (To1), and
wherein operating the input stage (2) in the third operating phase (To3) comprises calculating a duration of the third operating phase (To1) dependent on a magnitude of the second maximum (-Ipk2) and operating the input stage (2) in the third operating phase for the calculated duration of the third operating phase.

9. The method according to any one of claims 5 to 8, wherein generating each period of the first alternating current (I2) further comprises:

operating the input stage (2) in a second operating mode in which the first alternating current (I2) changes from the first maximum (Ipk1) towards zero; and
operating the input stage (2) in a fourth operating mode in which the first alternating current (I2) changes from the second maximum (-Ipk2) towards zero.

10. The method according to claim 9,

wherein operating the input stage (2) in the second operating phase (To2) comprises monitoring the first alternating current (I2) and ending the second operating phase (To2) when the monitored first alternating current (I2) reaches zero; and
wherein operating the input stage (2) in the fourth operating phase (To4) comprises monitoring the first alternating current (I2) and ending the fourth operating phase (To4) when the monitored first alternating current (I2) reaches zero.

11. The method according to claim 9,

wherein operating the input stage (2) in the second operating phase (To2) comprises calculating a duration of the second operating phase (To2) dependent on a magnitude of the first maximum (Ipk1) and operating the input stage (2) in the second operating phase for the calculated duration of the second operating phase (To2), and
wherein operating the input stage (2) in the fourth operating phase (To4) comprises calculating a duration of the fourth operating phase (To4) dependent on a magnitude of the second maximum (-Ipk2) and operating the input stage (2) in the fourth operating phase for the calculated duration of the fourth operating phase (To4).

12. The method according to any one of the preceding claims,

wherein the input stage (2) comprises a first half-bridge having a first tap (N21) and a second half-bridge having a second tap (N22),
wherein the transformer circuit (3) is connected between the first and second taps (N21, N22), and
wherein the first half-bridge is a switch half-bridge comprising a first electronic switch (21) and a second electronic switch (22).

13. The method according to any one of the preceding claims,

wherein the transformer (31) is an ideal transformer,
wherein the transformer circuit (3) further comprises a series inductor (32) connected in series with the primary winding, and
wherein the series inductor (32) and the transformer (31) are formed by the same real transformer.

14. A control circuit configured to operate a power converter in a startup mode,

wherein to operate the power converter in the startup mode comprises to operate the power converter in a plurality of burst cycles (200),
wherein to operate the power converter in each burst cycle includes to activate the input stage (2) for an activation period (201) and deactivate the input stage (2) for a deactivation period (202),
wherein a duration (T2) of the deactivation period (202) is at least 5 times a duration (T1) of the activation period (201).

15. An executable program code comprising instructions which, when executed by a control circuit comprising a microcontroller, to cause the control circuit to carry out the method according to any one of claims 1 to 20.

FIG 1

OPERATING THE POWER CONVERTER IN A PLURALITY OF BURST CYCLES — 100

EACH BURST CYCLE INCLUDES ACTIVATING THE INPUT STAGE FOR AN ACTIVATION PERIOD AND DEACTIVATING THE INPUT STAGE FOR A DEACTIVATION PERIOD — 101

A DURATION OF THE DEACTIVATION PERIOD IS AT LEAST 5 TIMES A DURATION OF THE ACTIVATION PERIOD — 102

FIG 2

FIG 3

FIG 4

FIG 5

FIG 6

FIG 7

FIG 8

S21

S22

S41

S42

Vout

Vin

I2

V22

V3

FIG 9

FIG 10

FIG 11

**FIG 12**

**FIG 13**

FIG 14

FIG 15A

FIG 15B

FIG 15C

FIG 16

FIG 17

FIG 18A

FIG 18B

FIG 19

FIG 20

FIG 21

FIG 22

FIG 23

FIG 24

FIG 25

Europäisches
Patentamt

European
Patent Office

Office européen
des brevets

# EUROPEAN SEARCH REPORT

**Application Number**

EP 24 16 3806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 973 092 A (UNIV HUAZHONG SCIENCE TECH) 6 August 2014 (2014-08-06) <br> * paragraph [0028] - paragraph [0034] * <br> * figures 1-3 * | 1-6,9, 12-15 | INV. <br> H02M1/36 <br> H02M3/00 <br> H02M3/335 |
| X | INOUE S ET AL: "A Bidirectional DC-DC Converter for an Energy Storage System With Galvanic Isolation", <br> IEEE TRANSACTIONS ON POWER ELECTRONICS, INSTITUTE OF ELECTRICAL AND ELECTRONICS ENGINEERS, USA, <br> vol. 22, no. 6, November 2007 (2007-11), pages 2299-2306, XP011196139, <br> ISSN: 0885-8993, DOI: 10.1109/TPEL.2007.909248 <br> * page 2304 - page 2305 * | 1-6,9, 12-15 | |
| X | JP 2023 088235 A (FUJI ELECTRIC CO LTD) 26 June 2023 (2023-06-26) <br> * paragraph [0005] - paragraph [0008] * <br> * paragraph [0072] - paragraph [0077] * <br> * paragraph [0104] - paragraph [0117] * <br> * paragraph [0150] - paragraph [0161] * <br> * figures 1,2,4,7 * | 1-15 | |

TECHNICAL FIELDS
SEARCHED (IPC)

H02M

The present search report has been drawn up for all claims

| Place of search | Date of completion of the search | Examiner |
|---|---|---|
| The Hague | 9 August 2024 | Lochhead, Steven |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 3806

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2024

| Patent document cited in search report | Publication date | Patent family member(s) | Publication date |
|---|---|---|---|
| CN 103973092 A | 06-08-2014 | NONE | |
| JP 2023088235 A | 26-06-2023 | NONE | |

EPO FORM P0459

For more details about this annex : see Official Journal of the European Patent Office, No. 12/82